# EUROPEAN PATENT SPECIFICATION

(11) **EP 4 541 646 B1**
(45) Date of publication and mention of the grant of the patent: **22.04.2026**
(21) Application number: 22950644.9
(22) Date of filing: 14.07.2022
(51) Int. Cl.: B60L 58/26, H01M 10/613, H01M 10/615, B60H 1/32

(54) **HEAT EXCHANGE DEVICE, HEAT EXCHANGE APPARATUS, THERMAL MANAGEMENT SYSTEM AND CONTROL METHOD THEREFOR, AND VEHICLE**
WÄRMETAUSCHERVORRICHTUNG, WÄRMETAUSCHERVORRICHTUNG, WÄRMEVERWALTUNGSSYSTEM UND STEUERUNGSVERFAHREN DAFÜR SOWIE FAHRZEUG
DISPOSITIF D'ÉCHANGE DE CHALEUR, APPAREIL D'ÉCHANGE DE CHALEUR, SYSTÈME DE GESTION THERMIQUE ET SON PROCÉDÉ DE COMMANDE, ET VÉHICULE

(43) Date of publication of application: 23.04.2025
(73) Proprietor: Shenzhen Yinwang Intelligent Technologies Co., Ltd., Shenzhen, Guangdong 518129 (CN)
(72) Inventor: CHEN, Fenfang, Shenzhen, Guangdong 518129 (CN); FENG, Hui, Shenzhen, Guangdong 518129 (CN); WANG, Deyuan, Shenzhen, Guangdong 518129 (CN); XU, Bo, Shenzhen, Guangdong 518129 (CN)
(74) Representative: MERH-IP Matias Erny Reichl Hoffmann Patentanwälte PartG mbB
(86) International application number: PCT/CN2022/105777
(87) International publication number: WO 2024/011520

(56) References cited:
- CN-A- 110 061 323
- CN-A- 111 864 302
- DE-A1- 102019 001 391
- US-A1- 2014 205 873
- US-A1- 2015 191 101
- US-A1- 2022 158 268
- US-A9- 2017 214 008
- US-B2- 10 933 712

## Description

### TECHNICAL FIELD

This application relates to the field of heat exchange technologies, and in particular, to a heat exchange apparatus, a heat exchange device, a thermal management system, a control method for a thermal management system, and a vehicle.

### BACKGROUND

In recent years, environmental pollution and energy shortage have accelerated development and utilization of green renewable energy. New energy vehicles have advantages such as low pollution, low noise, and high energy efficiency, and have become a research hotspot in the automobile industry. Currently, power batteries used in the new energy vehicles are mainly lithium-ion batteries. Efficiency, a service life, and stability of the lithium-ion battery are greatly affected by a temperature. Specifically, a low temperature causes a decrease in charging and discharging efficiency of the battery and an increase in heat generation power, and further causes lithium plating on a negative electrode, causing an irreversible capacity loss to the battery. A high temperature accelerates aging of the battery, and a safety accident such as thermal runaway may occur when a specific temperature is exceeded. Therefore, to improve performance and use safety of the battery, thermal management may be performed on the battery. In an existing thermal management manner, heat dissipation may be implemented for the battery, or heat preservation may be implemented for the battery. However, a balance between the two thermal management requirements cannot be achieved. Therefore, a good thermal management effect cannot be achieved. US 2015/191101 A1 and DE 10 2019 001391 A1 disclose heat exchange apparatuses according to the preamble of claim 1.

### SUMMARY

This application provides a heat exchange apparatus, a heat exchange device, a thermal management system, a control method for a thermal management system, and a vehicle, to implement a heat exchange or heat preservation requirement of a to-be-heat-exchanged element, and improve performance and use safety of the to-be-heat-exchanged element.

According to a first aspect, this application provides a heat exchange apparatus. The heat exchange apparatus may include a housing and a spacer plate. The spacer plate is disposed in the housing, and separates the housing into a first cavity and a second cavity. An outer wall on a side that is of the first cavity and that is away from the second cavity may be configured to be in thermally conductive contact with a to-be-heat-exchanged element. The first cavity may be provided with a first inlet and a first outlet. The second cavity may be provided with a second inlet and a second outlet. A first sealing element may be disposed at the second inlet, and a second sealing element is disposed at the second outlet. The first sealing element may be configured to open or close the second inlet, and the second sealing element may be configured to open or close the second outlet.

In the solution, heat dissipation or heating may be implemented for the to-be-heat-exchanged element through circulation of a heat exchange medium in the first cavity, and the second cavity has two states: a ventilated state in which the first sealing element opens the second inlet and the second sealing element opens the second outlet, and a closed state in which the first sealing element closes the second inlet and the second sealing element closes the second outlet. Heat dissipation or heating may also be implemented for the to-be-heat-exchanged element through circulation of a heat exchange medium in the second cavity in the ventilated state, and in the closed state, the to-be-heat-exchanged element may be isolated from external air, to reduce impact of an external high temperature or low temperature on the to-be-heat-exchanged element, and achieve a heat preservation effect for the to-be-heat-exchanged element. Therefore, according to the heat exchange apparatus provided in this application, a balance between heat exchange or heat preservation requirements of the to-be-heat-exchanged element can be achieved, and performance and use safety of the to-be-heat-exchanged element can be improved.

In some possible implementation solutions, the second inlet and the second outlet may be disposed opposite to each other, to increase a circulation speed of the heat exchange medium in the second cavity in the ventilated state, so as to improve heat exchange efficiency between the second cavity and the to-be-heat-exchanged element.

In some possible implementation solutions, a plurality of fins are disposed on a side that is of the spacer plate and that faces the second cavity, and an end that is of the fins and that faces away from the spacer plate is disposed at an interval from an inner wall on a side that is of the second cavity and that is away from the first cavity. The fins can enhance strength and rigidity of the heat exchange apparatus, and further helps increase an effective contact area between the second cavity and the heat exchange medium, to improve heat exchange efficiency of the second cavity.

During specific disposition, the fins may extend in a direction from the second inlet to the second outlet, to reduce obstacles to flow of the heat exchange medium, so that the heat exchange medium can smoothly and efficiently flow in the second cavity.

In addition, a heat preservation member may be disposed at ends that are of at least some of the fins and that face away from the spacer plate, and the heat preservation member may be supported between the corresponding fins and an inner wall of the second cavity, to further improve structural strength of the heat exchange apparatus without affecting heat preservation performance of the second cavity in the closed state.

For example, a material of the heat preservation member includes but is not limited to mica, polystyrene, or polyurethane.

In some possible implementation solutions, a first sealing ring may be disposed at an end part of the second inlet, and when the first sealing element closes the second inlet, the first sealing ring may be squeezed between the first sealing element and the end part of the second inlet, to reduce a risk of air leakage at the second inlet, and improve a sealing effect of the second cavity in the closed state.

Similarly, a second sealing ring may be disposed at an end part of the second outlet, and when the second sealing element closes the second outlet, the second sealing ring may be squeezed between the second sealing element and the end part of the second outlet, to reduce a risk of air leakage at the second outlet, and further improve the sealing effect of the second cavity in the closed state.

In some possible implementation solutions, the housing may be provided with a vacuum exhaust port that communicates with the second cavity. When the second cavity is in the closed state, air in the second cavity may be discharged through the vacuum exhaust port, so that the second cavity becomes a vacuum cavity, to improve a heat preservation effect of the second cavity.

In some possible implementation solutions, a first heat insulation layer may be disposed on the inner wall on the side that is of the second cavity and that is away from the first cavity. The first heat insulation layer can reduce heat transfer between the second cavity and an external environment, to help improve a heat preservation effect of the second cavity. For example, a material of the first heat insulation layer includes but is not limited to aluminum foil, aerogel, or polyurethane foam.

Similarly, a second heat insulation layer may be further disposed on an outer wall on the side that is of the second cavity and that is away from the first cavity, to further reduce heat transfer between the second cavity and the external environment. For example, a material of the second heat insulation layer includes but is not limited to aerogel or polyurethane foam.

In some possible implementation solutions, the first sealing element may be rotatably disposed on the heat exchange apparatus by using a rotating shaft. In this way, when the first sealing element rotates around the rotating shaft, the second inlet may be opened or closed. Similarly, the second sealing element may also be rotatably disposed on the heat exchange apparatus by using a rotating shaft, to open or close the second outlet when rotating around the rotating shaft.

In some possible implementation solutions, the heat exchange medium circulating in the first cavity may be a coolant, that is, the first cavity may be a coolant accommodation cavity; and the heat exchange medium circulating in the second cavity in the ventilated state may be air, that is, the second cavity may be an air cavity.

According to a second aspect, this application further provides a heat exchange device. The heat exchange device may include a drive component and the heat exchange apparatus in any one of the possible implementation solutions of the first aspect. The drive component may be separately connected to a first sealing element and a second sealing element through transmission, to drive the first sealing element to open or close a second inlet, and drive the second sealing element to open or close a second outlet, so as to reduce operation difficulty of switching a second cavity between a ventilated state and a closed state.

During specific disposition, the first sealing element and the second sealing element may be driven by using a same drive component, or may be respectively driven by using separate drive components, or the first sealing element and the second sealing element may be separately driven by using a plurality of drive components, to improve reliability of driving the first sealing element and the second sealing element.

According to a third aspect, this application further provides a thermal management system. The thermal management system may include a compressor, a condenser, a cooler, an expansion valve, a circulating pump, and the heat exchange device provided in the second aspect. The cooler includes a first runner and a second runner that are isolated from each other. During specific disposition, an outlet of the compressor is connected to an inlet of the condenser, an outlet of the condenser is connected to an inlet of the first runner through the expansion valve, and an outlet of the first runner is connected to an inlet of the compressor, to form a first circulation loop. In addition, an outlet of the circulating pump is connected to a first inlet of a first cavity, a first outlet of the first cavity is connected to an inlet of the second runner, and an outlet of the second runner is connected to an inlet of the circulating pump, to form a second circulation loop. Heat dissipation may be implemented for a to-be-heat-exchanged element by using the two circulation loops and the first cavity, and a second cavity is switched between a ventilated state and a closed state, to meet heat exchange or heat preservation requirements of the to-be-heat-exchanged element in different temperature conditions.

In some possible implementation solutions, the second cavity is provided with a vacuum exhaust port. In this case, the thermal management system may further include a vacuum pump, an air intake port of the vacuum pump may be connected to the vacuum exhaust port, and the vacuum pump may be configured to extract air from the second cavity when a first sealing element closes a second inlet and a second sealing element closes a second outlet, to improve a heat preservation effect of the second cavity in the closed state.

In some possible implementation solutions, the thermal management system may further include a temperature detection apparatus and a controller. The temperature detection apparatus may be configured to detect an ambient temperature and a temperature of the to-be-heat-exchanged element. The controller is separately electrically connected to the compressor, the circulating pump, a drive component, and the temperature detection apparatus, and may be configured to: when the temperature of the to-be-heat-exchanged element falls within a first temperature interval, control the compressor and the circulating pump to be turned off, and control the drive component to drive the first sealing element to close the second inlet, and to drive the second sealing element to close the second outlet, to adjust the second cavity to the closed state. Heat preservation is performed for the to-be-heat-exchanged element by using the heat exchange apparatus, so that the to-be-heat-exchanged element continues to be kept within a proper temperature interval of the to-be-heat-exchanged element.

In some other possible implementation solutions, the controller may alternatively be configured to: when the temperature of the to-be-heat-exchanged element falls within a first temperature interval, and the ambient temperature is less than a first temperature threshold, control the compressor and the circulating pump to be turned off, and control the drive component to drive the first sealing element to close the second inlet, and to drive the second sealing element to close the second outlet, to adjust the second cavity to the closed state. In this case, the ambient temperature is low. Therefore, the second cavity is adjusted to the closed state, so that the to-be-heat-exchanged element can be thermally isolated from external air, to reduce adverse impact of an external low temperature on the to-be-heat-exchanged element.

Alternatively, the controller may be configured to: when the temperature of the to-be-heat-exchanged element falls within a first temperature interval, and the ambient temperature is greater than or equal to a first temperature threshold and less than or equal to a second temperature threshold, control the compressor and the circulating pump to be turned off, and control the drive component to drive the first sealing element to open the second inlet, and to drive the second sealing element to open the second outlet, to adjust the second cavity to the ventilated state. In this condition, the ambient temperature does not greatly differ from the temperature of the to-be-heat-exchanged element. Therefore, the second cavity is adjusted to the ventilated state, to help keep the to-be-heat-exchanged element within a proper temperature interval of the to-be-heat-exchanged element.

Alternatively, the controller may be configured to: when the temperature of the to-be-heat-exchanged element falls within a first temperature interval, and the ambient temperature is greater than a second temperature threshold, control the compressor and the circulating pump to be turned on, and control the drive component to drive the first sealing element to close the second inlet, and to drive the second sealing element to close the second outlet, to adjust the second cavity to the closed state. In this condition, the external ambient temperature is high. Therefore, heat dissipation may be performed for the to-be-heat-exchanged element in a liquid cooling mode, and the second cavity is adjusted to the closed state, so that the to-be-heat-exchanged element can be thermally isolated from external air, to reduce adverse impact of an external high temperature on the to-be-heat-exchanged element.

In some possible implementation solutions, the controller may be further configured to: when the temperature of the to-be-heat-exchanged element falls within a second temperature interval, and a difference between the ambient temperature and the temperature of the to-be-heat-exchanged element is greater than or equal to a temperature difference threshold, control the compressor and the circulating pump to be turned off, and control the drive component to drive the first sealing element to open the second inlet, and to drive the second sealing element to open the second outlet, to adjust the second cavity to the ventilated state. In this condition, the temperature of the to-be-heat-exchanged element is low, and the ambient temperature is clearly higher than the temperature of the to-be-heat-exchanged element. Therefore, the second cavity may be adjusted to the ventilated state, to heat the to-be-heat-exchanged element by using a natural heat source.

Alternatively, the controller may be further configured to: when the temperature of the to-be-heat-exchanged element falls within a second temperature interval, and a difference between the ambient temperature and the temperature of the to-be-heat-exchanged element is less than a temperature difference threshold, control the drive component to drive the first sealing element to close the second inlet, and to drive the second sealing element to close the second outlet, to adjust the second cavity to the closed state. In this condition, the temperature of the to-be-heat-exchanged element is low, and the ambient temperature is close to the temperature of the to-be-heat-exchanged element. Therefore, the second cavity is adjusted to the closed state, so that the to-be-heat-exchanged element can be thermally isolated from external air, to reduce impact of an external low temperature on the to-be-heat-exchanged element.

The second temperature interval is a temperature interval in which a temperature value is less than a smallest value in the first temperature interval.

In some implementations, the thermal management system may further include a heater, and the heater may be connected between the first cavity and the second runner. The controller may be further electrically connected to the heater. When the temperature of the to-be-heat-exchanged element falls within the second temperature interval, and the difference between the ambient temperature and the temperature of the to-be-heat-exchanged element is less than the temperature difference threshold, the controller may be further configured to: control the compressor to be turned off, and control the circulating pump and the heater to be turned on, to heat the to-be-heat-exchanged element by using the heater, so that the to-be-heat-exchanged element can normally work.

In some possible implementation solutions, the controller may be further configured to: when the temperature of the to-be-heat-exchanged element falls within a third temperature interval, and the ambient temperature is less than the first temperature threshold, control the compressor and the circulating pump to be turned on, and control the drive component to drive the first sealing element to open the second inlet, and to drive the second sealing element to open the second outlet, to adjust the second cavity to the ventilated state. In this condition, the temperature of the to-be-heat-exchanged element is high, and the ambient temperature is low. Therefore, heat dissipation may be performed for the to-be-heat-exchanged element in a liquid cooling and air cooling compound mode, to make full use of a natural cooling source, so as to reduce energy consumption of the thermal management system while implementing heat dissipation for the to-be-heat-exchanged element.

Alternatively, the controller may be further configured to: when the temperature of the to-be-heat-exchanged element falls within a third temperature interval, and the ambient temperature is greater than or equal to the first temperature threshold, control the compressor and the circulating pump to be turned on, and control the drive component to drive the first sealing element to close the second inlet, and to drive the second sealing element to close the second outlet, to adjust the second cavity to the closed state. In this condition, the ambient temperature is high. Therefore, the second cavity may be adjusted to the closed state, so that the to-be-heat-exchanged element is thermally isolated from external air, and the compressor and the circulating pump are turned on, to separately perform heat dissipation for the to-be-heat-exchanged element in a liquid cooling mode, so as to achieve a good heat dissipation effect.

The third temperature interval is a temperature interval in which a temperature value is greater than a largest value in the first temperature interval.

In some possible implementation solutions, the thermal management system may further include a vacuum gauge, and the vacuum gauge may be configured to detect a vacuum degree in the second cavity. The controller may be further electrically connected to the vacuum gauge, and is configured to: when the drive component drives the first sealing element to close the second inlet, and drives the second sealing element to close the second outlet, and the vacuum degree in the second cavity is greater than or equal to a vacuum degree threshold, control the vacuum pump to be turned off, to reduce energy consumption of the vacuum pump.

In some possible implementation solutions, the thermal management system may further include a first vacuum valve and a second vacuum valve. The first vacuum valve is connected between the air intake port of the vacuum pump and the vacuum exhaust port, and the second vacuum valve is connected between the air intake port of the vacuum pump and a vacuum booster of a vehicle. In this way, the thermal management system and a vacuum booster braking system of the vehicle may reuse a same vacuum pump, to help reduce costs of the entire vehicle.

According to a fourth aspect, this application further provides a thermal management system. The thermal management system may include an air-cooled heat sink, a circulating pump, and the heat exchange device provided in the second aspect. An outlet of the circulating pump is connected to a first inlet of a first cavity, a first outlet of the first cavity is connected to an inlet of the air-cooled heat sink, and an outlet of the air-cooled heat sink is connected to an inlet of the circulating pump. In the solution, heat dissipation may be implemented for a coolant in the first cavity by using a feature of the air-cooled heat sink, to help simplify a structure of the thermal management system.

In some possible implementation solutions, a fan may be further disposed at the air-cooled heat sink, to increase a flow rate of air flowing through a surface of the air-cooled heat sink, so as to improve heat exchange efficiency of the air-cooled heat sink.

According to a fifth aspect, this application further provides a control method for a thermal management system, used to control the thermal management system in the third aspect. The control method includes:
obtaining a temperature of a to-be-heat-exchanged element and an ambient temperature; and
when the temperature of the to-be-heat-exchanged element falls within a first temperature interval, and the ambient temperature is less than a first temperature threshold, controlling a compressor and a circulating pump to be turned off, and controlling a drive component to drive a first sealing element to close a second inlet, and to drive a second sealing element to close a second outlet. In this condition, the ambient temperature does not greatly differ from the temperature of the to-be-heat-exchanged element. Therefore, a second cavity is adjusted to a ventilated state, to help keep the to-be-heat-exchanged element within a proper temperature interval of the to-be-heat-exchanged element.

Alternatively, the control method includes: when the temperature of the to-be-heat-exchanged element falls within a first temperature interval, and the ambient temperature is greater than or equal to a first temperature threshold and less than or equal to a second temperature threshold, controlling a compressor and a circulating pump to be turned off, and controlling a drive component to drive a first sealing element to open a second inlet, and to drive a second sealing element to open a second outlet. In this condition, the external ambient temperature is high. Therefore, heat dissipation may be performed for the to-be-heat-exchanged element in a liquid cooling mode, and a second cavity is adjusted to a closed state, so that the to-be-heat-exchanged element can be thermally isolated from external air, to reduce adverse impact of an external high temperature on the to-be-heat-exchanged element.

Alternatively, the control method includes: when the temperature of the to-be-heat-exchanged element falls within a first temperature interval, and the ambient temperature is greater than a second temperature threshold, controlling a drive component to drive a first sealing element to close a second inlet, and to drive a second sealing element to close a second outlet. In this condition, the external ambient temperature is high. Therefore, heat dissipation may be performed for the to-be-heat-exchanged element in a liquid cooling mode, and a second cavity is adjusted to a closed state, so that the to-be-heat-exchanged element can be thermally isolated from external air, to reduce adverse impact of an external high temperature on the to-be-heat-exchanged element.

In some possible implementation solutions, the control method may further include:
when the temperature of the to-be-heat-exchanged element falls within a second temperature interval, and a difference between the ambient temperature and the temperature of the to-be-heat-exchanged element is greater than or equal to a temperature difference threshold, controlling the compressor and the circulating pump to be turned off, and controlling the drive component to drive the first sealing element to open the second inlet, and to drive the second sealing element to open the second outlet. In this condition, the temperature of the to-be-heat-exchanged element is low, and the ambient temperature is clearly higher than the temperature of the to-be-heat-exchanged element. Therefore, the second cavity may be adjusted to the ventilated state, to heat the to-be-heat-exchanged element by using a natural heat source.

Alternatively, the control method may further include: when the temperature of the to-be-heat-exchanged element falls within a second temperature interval, and a difference between the ambient temperature and the temperature of the to-be-heat-exchanged element is less than a temperature difference threshold, controlling the drive component to drive the first sealing element to close the second inlet, and to drive the second sealing element to close the second outlet. In this condition, the temperature of the to-be-heat-exchanged element is low, and the ambient temperature is close to the temperature of the to-be-heat-exchanged element. Therefore, the second cavity is adjusted to the closed state, so that the to-be-heat-exchanged element can be thermally isolated from external air, to reduce impact of an external low temperature on the to-be-heat-exchanged element.

The second temperature interval is an interval in which a temperature value is less than a smallest temperature value in the first temperature interval.

In some possible implementation solutions, when the temperature of the to-be-heat-exchanged element falls within the second temperature interval, and the difference between the ambient temperature and the temperature of the to-be-heat-exchanged element is less than the temperature difference threshold, the control method may further include:
controlling the compressor to be turned off, and controlling the circulating pump and a heater to be turned on, to heat the to-be-heat-exchanged element by using the heater, so that the to-be-heat-exchanged element can normally work.

In some possible implementation solutions, the control method may further include:
when the temperature of the to-be-heat-exchanged element falls within a third temperature interval, and the ambient temperature is less than the first temperature threshold, controlling the compressor and the circulating pump to be turned on, and controlling the drive component to drive the first sealing element to open the second inlet, and to drive the second sealing element to open the second outlet. In this condition, the temperature of the to-be-heat-exchanged element is high, and the ambient temperature is low. Therefore, heat dissipation may be performed for the to-be-heat-exchanged element in a liquid cooling and air cooling compound mode, to make full use of a natural cooling source, so as to reduce energy consumption of the thermal management system while implementing heat dissipation for the to-be-heat-exchanged element.

Alternatively, the control method may further include: when the temperature of the to-be-heat-exchanged element falls within a third temperature interval, and the ambient temperature is greater than or equal to the first temperature threshold, controlling the compressor and the circulating pump to be turned on, and controlling the drive component to drive the first sealing element to close the second inlet, and to drive the second sealing element to close the second outlet. In this condition, the ambient temperature is high. Therefore, the second cavity may be adjusted to the closed state, so that the to-be-heat-exchanged element is thermally isolated from external air, and the compressor and the circulating pump are turned on, to separately perform heat dissipation for the to-be-heat-exchanged element in a liquid cooling mode, so as to achieve a good heat dissipation effect.

The third temperature interval is an interval in which a temperature value is greater than a largest temperature value in the first temperature interval.

In some possible implementation solutions, when the thermal management system further includes a vacuum pump, an air intake port of the vacuum pump is connected to a vacuum exhaust port of the second cavity. In this case, the control method may further include:
when the drive component drives the first sealing element to close the second inlet, and drives the second sealing element to close the second outlet, controlling the vacuum pump to be turned on, to extract air from the second cavity, so as to improve a heat preservation effect of the second cavity in the closed state.

According to a sixth aspect, this application further provides a control apparatus for a thermal management system, configured to control the thermal management system in the third aspect. The control apparatus includes:
a communication unit, configured to obtain a temperature of a to-be-heat-exchanged element and an ambient temperature; and
a processing unit, configured to: when the temperature of the to-be-heat-exchanged element falls within a first temperature interval, and the ambient temperature is less than a first temperature threshold, control a compressor and a circulating pump to be turned off, and control a drive component to drive a first sealing element to close a second inlet, and to drive a second sealing element to close a second outlet. In this condition, the ambient temperature does not greatly differ from the temperature of the to-be-heat-exchanged element. Therefore, a second cavity is adjusted to a ventilated state, to help keep the to-be-heat-exchanged element within a proper temperature interval of the to-be-heat-exchanged element.

Alternatively, the processing unit is configured to: when the temperature of the to-be-heat-exchanged element falls within a first temperature interval, and the ambient temperature is greater than or equal to a first temperature threshold and less than or equal to a second temperature threshold, control a compressor and a circulating pump to be turned off, and control a drive component to drive a first sealing element to open a second inlet, and to drive a second sealing element to open a second outlet. In this condition, the external ambient temperature is high. Therefore, heat dissipation may be performed for the to-be-heat-exchanged element in a liquid cooling mode, and a second cavity is adjusted to a closed state, so that the to-be-heat-exchanged element can be thermally isolated from external air, to reduce adverse impact of an external high temperature on the to-be-heat-exchanged element.

Alternatively, the processing unit is configured to: when the temperature of the to-be-heat-exchanged element falls within a first temperature interval, and the ambient temperature is greater than a second temperature threshold, control a drive component to drive a first sealing element to close a second inlet, and to drive a second sealing element to close a second outlet. In this condition, the external ambient temperature is high. Therefore, heat dissipation may be performed for the to-be-heat-exchanged element in a liquid cooling mode, and a second cavity is adjusted to a closed state, so that the to-be-heat-exchanged element can be thermally isolated from external air, to reduce adverse impact of an external high temperature on the to-be-heat-exchanged element.

In some possible implementation solutions, the processing unit may be further configured to:
when the temperature of the to-be-heat-exchanged element falls within a second temperature interval, and a difference between the ambient temperature and the temperature of the to-be-heat-exchanged element is greater than or equal to a temperature difference threshold, control the compressor and the circulating pump to be turned off, and control the drive component to drive the first sealing element to open the second inlet, and to drive the second sealing element to open the second outlet. In this condition, the temperature of the to-be-heat-exchanged element is low, and the ambient temperature is clearly higher than the temperature of the to-be-heat-exchanged element. Therefore, the second cavity may be adjusted to the ventilated state, to heat the to-be-heat-exchanged element by using a natural heat source.

Alternatively, the processing unit may be further configured to: when the temperature of the to-be-heat-exchanged element falls within a second temperature interval, and a difference between the ambient temperature and the temperature of the to-be-heat-exchanged element is less than a temperature difference threshold, control the drive component to drive the first sealing element to close the second inlet, and to drive the second sealing element to close the second outlet. In this condition, the temperature of the to-be-heat-exchanged element is low, and the ambient temperature is close to the temperature of the to-be-heat-exchanged element. Therefore, the second cavity is adjusted to the closed state, so that the to-be-heat-exchanged element can be thermally isolated from external air, to reduce impact of an external low temperature on the to-be-heat-exchanged element.

The second temperature interval is an interval in which a temperature value is less than a smallest temperature value in the first temperature interval.

In some possible implementation solutions, when the temperature of the to-be-heat-exchanged element falls within the second temperature interval, and the difference between the ambient temperature and the temperature of the to-be-heat-exchanged element is less than the temperature difference threshold, the processing unit may be further configured to:
control the compressor to be turned off, and control the circulating pump and a heater to be turned on, to heat the to-be-heat-exchanged element by using the heater, so that the to-be-heat-exchanged element can normally work.

In some possible implementation solutions, the processing unit may be further configured to:
when the temperature of the to-be-heat-exchanged element falls within a third temperature interval, and the ambient temperature is less than the first temperature threshold, control the compressor and the circulating pump to be turned on, and control the drive component to drive the first sealing element to open the second inlet, and to drive the second sealing element to open the second outlet. In this condition, the temperature of the to-be-heat-exchanged element is high, and the ambient temperature is low. Therefore, heat dissipation may be performed for the to-be-heat-exchanged element in a liquid cooling and air cooling compound mode, to make full use of a natural cooling source, so as to reduce energy consumption of the thermal management system while implementing heat dissipation for the to-be-heat-exchanged element.

Alternatively, the processing unit may be further configured to: when the temperature of the to-be-heat-exchanged element falls within a third temperature interval, and the ambient temperature is greater than or equal to the first temperature threshold, control the compressor and the circulating pump to be turned on, and control the drive component to drive the first sealing element to close the second inlet, and to drive the second sealing element to close the second outlet. In this condition, the ambient temperature is high. Therefore, the second cavity may be adjusted to the closed state, so that the to-be-heat-exchanged element is thermally isolated from external air, and the compressor and the circulating pump are turned on, to separately perform heat dissipation for the to-be-heat-exchanged element in a liquid cooling mode, so as to achieve a good heat dissipation effect.

The third temperature interval is an interval in which a temperature value is greater than a largest temperature value in the first temperature interval.

In some possible implementation solutions, when the thermal management system further includes a vacuum pump, an air intake port of the vacuum pump is connected to a vacuum exhaust port of the second cavity. In this case, the processing unit may be further configured to:
when the drive component drives the first sealing element to close the second inlet, and drives the second sealing element to close the second outlet, control the vacuum pump to be turned on, to extract air from the second cavity, so as to improve a heat preservation effect of the second cavity in the closed state.

According to a seventh aspect, this application may further provide a computer-readable storage medium. The computer-readable storage medium stores a computer program or instructions. When the computer program or the instructions runs or run on a computer, the computer is enabled to implement the method provided in the fifth aspect.

According to an eighth aspect, this application further provides a computer program. When the computer program runs on a computer, the computer is enabled to implement the method provided in the fifth aspect.

According to a ninth aspect, this application further provides a vehicle. The vehicle may include a to-be-heat-exchanged element and the thermal management system provided in the third aspect. The thermal management system may be configured to perform heat exchange for the to-be-heat-exchanged element, and can meet a heat preservation requirement of the to-be-heat-exchanged element, to improve performance and use safety of the to-be-heat-exchanged element.

In some possible implementation solutions, the to-be-heat-exchanged element may be specifically a to-be-heat-exchanged element of the vehicle.

### BRIEF DESCRIPTION OF DRAWINGS

FIG. 1 is a schematic diagram of a structure of a vehicle according to an embodiment of this application;
FIG. 2 is a schematic diagram of an assembled state of a heat exchange apparatus and a to-be-heat-exchanged element according to an embodiment of this application;
FIG. 3 is a schematic diagram of a cross-sectional structure of the heat exchange apparatus and the to-be-heat-exchanged element shown in FIG. 2 in an assembled state;
FIG. 4 is a schematic diagram of a structure of the heat exchange apparatus shown in FIG. 2;
FIG. 5 is a schematic diagram of a structure of another heat exchange apparatus according to an embodiment of this application;
FIG. 6 is a schematic diagram of a cross-sectional structure of another heat exchange apparatus according to an embodiment of this application;
FIG. 7 is a partially enlarged view of a location A in FIG. 6;
FIG. 8 is a schematic diagram of a structure of a heat exchange device according to an embodiment of this application;
FIG. 9 is a schematic diagram of a structure of a thermal management system according to an embodiment of this application;
FIG. 10 is a schematic diagram of a structure of another thermal management system according to an embodiment of this application;
FIG. 11 is a diagram of a control principle of a thermal management system according to an embodiment of this application;
FIG. 12 is a schematic diagram of a structure of another thermal management system according to an embodiment of this application;
FIG. 13 is a schematic diagram of a structure of another thermal management system according to an embodiment of this application;
FIG. 14 is a flowchart of a control method for a thermal management system according to an embodiment of this application;
FIG. 15 is a flowchart of another control method for a thermal management system according to an embodiment of this application;
FIG. 16 is a flowchart of another control method for a thermal management system according to an embodiment of this application; and
FIG. 17 is a schematic diagram of a structure of a computing device according to an embodiment of this application.

### Reference numerals:

1: Battery pack; 2: Powertrain system; 3: Drive wheel; 4: Heat exchange apparatus; 5: Drive component;
410: Housing; 411: First cavity; 4111: First inlet; 4112: First outlet; 412: Second cavity;
4121: Second inlet; 4122: Second outlet; 4123: First sealing element; 4124: Second sealing element;
4125: Vacuum exhaust port; 4126: First heat insulation layer; 4127: Second heat insulation layer; 4128: Vacuum gauge interface; 420: Spacer plate;
421: Fin; 422: Heat preservation member; 110: Heat exchange device; 120: Compressor; 130: Condenser; 140: Cooler;
141: First runner; 142: Second runner; 150: Expansion valve; 160: Circulating pump; 170: Heater; 180: Vacuum pump;
181: First vacuum valve; 182: Second vacuum valve; 190: Vacuum gauge; 1100: Air-cooled heat sink; 1101: Fan; and
1000: Computing device; 1110: Processor; 1120: Memory; 1130: Communication interface; 1140: Bus.

### DESCRIPTION OF EMBODIMENTS

To make the objectives, technical solutions, and advantages of this application clearer, the following further describes this application in detail with reference to the accompanying drawings. However, the example implementations can be implemented in a plurality of forms, and should not be construed as being limited to the implementations described herein. Same reference numerals in the figures represent same or similar structures. Therefore, repeated descriptions of the structures are omitted. Words that express positions and directions and that are described in embodiments of this application are described by using the accompanying drawings as an example. However, changes may be made based on a requirement, and the changes fall within the protection scope of this application. The accompanying drawings in embodiments of this application are merely used to illustrate a relative position relationship and do not represent a true scale.

It should be noted that specific details are provided in the following descriptions to facilitate understanding of this application. However, this application can be implemented in other manners different from those described herein, and a person skilled in the art can make similar inferences without departing from the connotation of this application. Therefore, this application is not limited to the specific implementations disclosed below.

In recent years, environmental pollution and energy shortage have accelerated development and utilization of green renewable energy. Developing new energy vehicles represented by an electric vehicle and a hybrid vehicle is an important measure to achieve energy conservation and emission reduction, and pollution prevention and control. In the electric vehicle, a fuel engine is replaced with a motor. Therefore, zero emission, low noise, and no pollution can be achieved, and a large amount of oil energy that is increasingly exhausted can be saved. The hybrid vehicle is driven by both a motor and a fuel engine. Therefore, the hybrid vehicle can not only give play to advantages of long endurance mileage and good power performance existing when the vehicle is driven by the engine, but also give play to advantages of low noise and no pollution existing when the vehicle is driven by the motor. With increasing maturity and development of power battery technologies, the electric vehicle and the hybrid vehicle inevitably become a main trend of the future automobile industry.

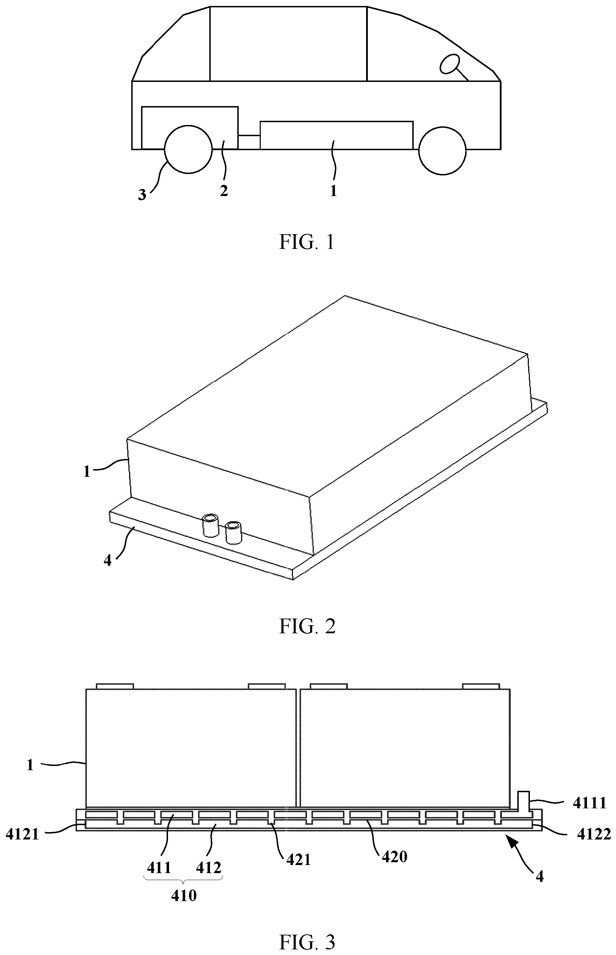

FIG. 1 is a schematic diagram of a structure of a vehicle according to an embodiment of this application. With reference to FIG. 1, the vehicle includes but is not limited to an electric vehicle or a hybrid vehicle. The vehicle may include a battery pack 1, a powertrain system 2, and a drive wheel 3. The battery pack 1 may be used as a power source of the vehicle to provide electric energy for the powertrain system 2. The powertrain system 2 is connected to the drive wheel 3, and may be configured to: convert electric energy of the battery pack 1 into driving force, and transfer the driving force to the drive wheel 3, to drive the vehicle to travel.

Currently, the battery pack 1 of the vehicle is mostly a lithium-ion battery. Efficiency, a service life, and stability of the lithium-ion battery are greatly affected by a temperature. For example, a low temperature causes a decrease in charging and discharging efficiency of the battery pack 1 and an increase in heat generation power, and further causes lithium plating on a negative electrode, causing an irreversible capacity loss to the battery pack 1. A high temperature accelerates aging of the battery pack 1, and a safety accident such as thermal runaway may occur when a specific temperature is exceeded. Therefore, to improve performance and use safety of the battery pack 1, thermal management may be performed on the battery pack 1.

Currently, a mainstream thermal management system for the battery pack 1 usually uses a liquid cooling/liquid heating solution. That is, a heat exchange component having an internal runner is disposed at a bottom or top of the battery pack 1, and a low-temperature or high-temperature medium is introduced into the internal runner of the heat exchange component, to cool and heat the battery pack 1. In addition, a surface of the battery pack 1 is usually coated with a heat preservation and heat insulation material, to reduce impact of an external high or low ambient temperature on the battery pack 1. However, in this thermal management manner, a balance between heat dissipation and heat preservation requirements of the battery pack 1 in different environmental conditions cannot be achieved. For example, in a high temperature or very cold environment, it is expected that the battery pack 1 has good heat preservation performance, to reduce heat exchange efficiency between the environment and an electrochemical cell, so as to reduce a probability that a temperature of the battery pack 1 deviates from an optimal temperature range of the battery pack 1 due to impact of the ambient temperature. When the temperature of the battery pack 1 is high (for example, after fast charging), and the ambient temperature is low, good heat preservation is not conducive to heat dissipation of the battery pack 1, and consequently energy consumption of the heat exchange component increases.

To resolve the foregoing problem, embodiments of this application provide a heat exchange apparatus and a thermal management system to which the heat exchange apparatus is applied, to achieve a balance between heat exchange or heat preservation requirements of a battery pack in different environmental conditions, and improve performance and use safety of the battery pack. The following describes the heat exchange apparatus and the thermal management system with reference to specific embodiments.

FIG. 2 is a schematic diagram of an assembled state of a heat exchange apparatus and a to-be-heat-exchanged element according to an embodiment of this application. In this embodiment of this application, the heat exchange apparatus 4 may be disposed on one side of the to-be-heat-exchanged element, and is in thermally conductive contact with the to-be-heat-exchanged element, to perform heat exchange or heat preservation for the to-be-heat-exchanged element. For example, the to-be-heat-exchanged element may be a battery pack 1 of a vehicle, or may be another element that requires heat exchange or heat preservation. This is not specifically limited in this application. Based on this, the heat exchange apparatus provided in embodiments of this application may be applied to the vehicle field, or may be applied to another field related to heat exchange. This is also not specifically limited in this application. In the following embodiments, an example in which the to-be-heat-exchanged element is the battery pack 1 is mainly used for description.

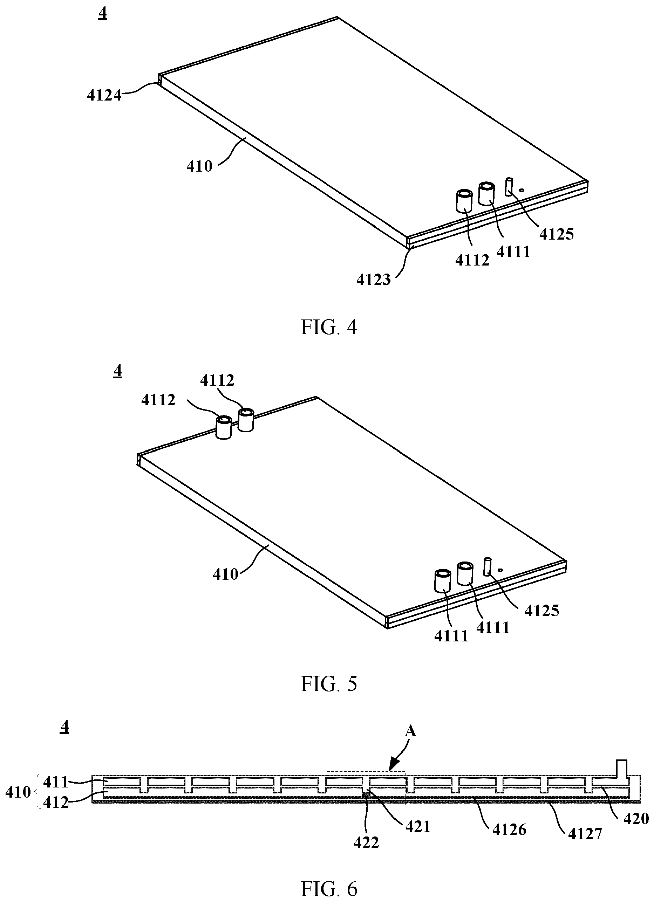

FIG. 3 is a schematic diagram of a cross-sectional structure of the heat exchange apparatus and the to-be-heat-exchanged element shown in FIG. 2 in an assembled state, and FIG. 4 is a schematic diagram of a structure of the heat exchange apparatus shown in FIG. 2. The heat exchange apparatus 4 may include a housing 410 and a spacer plate 420 disposed in the housing 410. The spacer plate 420 separates the housing 410 into two cavities: a first cavity 411 and a second cavity 412. The first cavity 411 is provided with a first inlet 4111 and a first outlet 4112, and the second cavity 412 is provided with a second inlet 4121 and a second outlet 4122, so that a heat exchange medium can circulate in the first cavity 411 and the second cavity 412, to exchange heat with the battery pack 1.

The heat exchange medium circulating in the first cavity 411 may be a coolant, that is, the first cavity 411 may be a coolant accommodation cavity. In this case, an outer wall on a side that is of the first cavity 411 and that is away from the second cavity 412 may be in direct or indirect thermally conductive contact with the battery pack 1, and the coolant may enter the first cavity 411 through the first inlet 4111, perform convection heat exchange with a wall surface of the first cavity 411, and then flow out from the first outlet 4112. In addition, the first cavity 411 may exchange heat with the battery pack 1 in a heat conduction manner, to further transfer a cooling capacity or heat of the coolant to the battery pack 1, so as to cool or heat the battery pack 1.

A coolant runner may be disposed in the first cavity 411. One end of the coolant runner communicates with the first inlet 4111, and the other end communicates with the first outlet 4112. For example, in some implementations, the coolant runner may be distributed in a snake shape or a spiral shape. When the coolant flows in the coolant runner, a cooling capacity or heat carried by the coolant may be evenly transferred to the first cavity 411, and then evenly transferred to the battery pack 1 by using the first cavity 411, to improve a heat dissipation or heating effect for the battery pack 1.

In some other implementations, a first flow combination cavity and a second flow combination cavity may be separately disposed in the first cavity 411. The first inlet 4111 communicates with the first flow combination cavity, and the first outlet 4112 communicates with the second flow combination cavity. In this case, there may be a plurality of coolant runners, and the plurality of coolant runners are disposed in parallel between the first flow combination cavity and the second flow combination cavity. A first flow dividing port is separately disposed at a position, in the first flow combination cavity, corresponding to each coolant runner, a second flow dividing port is separately disposed at a position, in the second flow combination cavity, corresponding to each coolant runner, and two ends of each coolant runner are respectively connected to the corresponding first flow dividing port and second flow dividing port. In this way, the coolant may enter the first flow combination cavity from the first inlet 4111, flow into each coolant runner through the first flow dividing port of the first flow combination cavity to evenly exchange heat with the wall surface of the first cavity 411, then flow into the second flow combination cavity through each second flow dividing port, and finally flow out from the first outlet 4112.

In this embodiment of this application, there may be one or more first inlets 4111 and first outlets 4112, and quantities of first inlets 4111 and first outlets 4112 may be the same or different. This is not limited in this application. FIG. 4 shows a case in which there is one first inlet 4111 and one first outlet 4112. FIG. 5 is a schematic diagram of a structure of another heat exchange apparatus according to an embodiment of this application. The figure shows a case in which there are two first inlets 4111 and two first outlets 4112. The two first inlets 4111 and the two first outlets 4112 may be respectively disposed on two opposite sides of the first cavity 411, to facilitate communication with the first flow combination cavity and the second flow combination cavity on the two sides. The quantities of first inlets 4111 and first outlets 4112 are increased, to help increase a flow speed of the coolant in the first cavity 411, so as to improve heat exchange efficiency of the heat exchange apparatus 4.

Refer to FIG. 3 and FIG. 4 again. In this embodiment, the second cavity 412 and the battery pack 1 are separated by the first cavity 411. Therefore, the second cavity 412 and the battery pack 1 may be in indirect thermally conductive contact with each other. In an implementation, the heat exchange medium circulating in the second cavity 412 may be air. In this case, the second cavity 412 is an air cavity. A first sealing element 4123 may be disposed at the second inlet, and a second sealing element 4124 may be disposed at the second outlet. The first sealing element 4123 may be configured to open or close the second inlet, and the second sealing element 4124 may be configured to open or close the second outlet. For example, the first sealing element 4123 and the second sealing element 4124 may be sealing plates. Optionally, the first sealing element 4123 may be rotatably disposed on the heat exchange apparatus 4 by using a rotating shaft, and when the first sealing element 4123 rotates around the rotating shaft, the second inlet may be opened or closed. Alternatively, a sliding rail may be disposed at a position, of the heat exchange apparatus 4, corresponding to the second inlet, so that the first sealing element 4123 is slidably disposed on the sliding rail, and opens or closes the second inlet when sliding along the sliding rail. Similarly, the second sealing element 4124 may be rotatably or slidably installed on the heat exchange apparatus 4. Details are not described herein.

When the first sealing element 4123 opens the second inlet, and the second sealing element 4124 opens the second outlet, the second cavity 412 is in a ventilated state, and air at a bottom of the vehicle may enter the second cavity 412 through the second inlet, perform convection heat exchange with a wall surface of the second cavity 412, and then be discharged from the second outlet. In addition, the second cavity 412 may indirectly exchange heat with the battery pack 1 through the first cavity 411, to further transfer a cooling capacity or heat of the air to the battery pack 1, so as to cool or heat the battery pack 1. When the first sealing element 4123 closes the second inlet, and the second sealing element 4124 closes the second outlet, the second cavity 412 is in a closed state. In this case, the second cavity 412 may form a closed cavity. By using a feature of a low coefficient of thermal conductivity of air, the second cavity 412 may thermally isolate the battery pack 1 from external air to some extent, to reduce impact of an external high temperature or low temperature on the battery pack 1 in some working conditions, so as to achieve a heat preservation effect for the battery pack 1.

In some implementations, the second inlet and the second outlet may be respectively disposed on two opposite sides of the second cavity 412, or it may be understood as that the second inlet and the second outlet are disposed opposite to each other. This helps increase an air circulation speed in the second cavity 412 in the ventilated state, and further can improve heat exchange efficiency between the second cavity 412 and the battery pack 1.

In addition, a plurality of fins 421 may be disposed on a side that is of the spacer plate 420 and that faces an inside of the second cavity 412, and an end that is of the fins 421 and that is away from the spacer plate 420 is disposed at an interval from an inner wall on a side that is of the second cavity 412 and that is away from the first cavity 411, that is, there may be a specific gap between an end part of the fins 421 and the inner wall of the second cavity 412. These fins 421 may be used as ribs to enhance strength and rigidity of the heat exchange apparatus 4, reduce a possibility that the heat exchange apparatus 4 is bent, and avoid a case in which a thermally conductive contact effect between the heat exchange apparatus 4 and the battery pack 1 is affected. In addition, an effective contact area between the second cavity 412 and the air can be increased by disposing the fins 421, to improve heat exchange efficiency between the second cavity 412 and the air. Therefore, a heat exchange effect of the heat exchange apparatus 4 can be further improved. In an implementation, the plurality of fins 421 may separately extend in a direction from the second inlet to the second outlet, that is, extend in a circulation direction of the air in the second cavity 412, to reduce obstacles to flow of the air, so that the air can smoothly and efficiently flow in the second cavity 412.

To improve a sealing effect of the second cavity 412 in the closed state, a first sealing ring may be disposed at an end part of the second inlet. When the first sealing element 4123 closes the second inlet, the first sealing ring may be squeezed between the first sealing element 4123 and the end part of the second inlet, to reduce a risk of air leakage at the second inlet. Similarly, a second sealing ring may be disposed at an end part of the second outlet. When the second sealing element 4124 closes the second outlet, the second sealing ring may be squeezed between the second sealing element 4124 and the end part of the second outlet, to reduce a risk of air leakage at the second outlet.

In some embodiments, the second cavity 412 may be further provided with a vacuum exhaust port 4125. When the second cavity 412 is in the closed state, air in the second cavity 412 may be discharged by using the vacuum exhaust port 4125, so that the second cavity 412 becomes a vacuum cavity. It should be understood that the coefficient of thermal conductivity of the air decreases with a vacuum degree in the second cavity 412. Therefore, the second cavity 412 is changed to a vacuum state through extraction, to further improve a heat preservation effect of the second cavity 412, and reduce impact of an external high temperature or low temperature on the battery pack 1.

When the vacuum exhaust port 4125 is specifically disposed, the vacuum exhaust port 4125 may be directly disposed on a wall surface on the side that is of the second cavity 412 and that faces away from the first cavity 411. Alternatively, with reference to FIG. 4, the vacuum exhaust port 4125 may be disposed on a wall surface on the side that is of the first cavity 411 and that faces away from the second cavity 412. In this case, an extension tube may be disposed in the housing 410, and it may be set that one end of the extension tube is connected to the vacuum exhaust port 4125, and the other end penetrates through the first cavity 411 and then extends into the second cavity 412, to communicate the second cavity 412 with the vacuum exhaust port 4125.

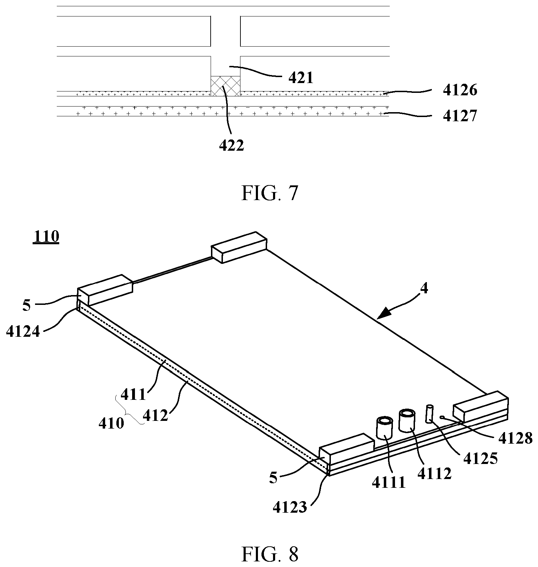

FIG. 6 is a schematic diagram of a cross-sectional structure of another heat exchange apparatus according to an embodiment of this application, and FIG. 7 is a partially enlarged view of a location A in FIG. 6. In this embodiment, a heat preservation member 422 may be further disposed at the end that is of the fins 421 and that faces away from the spacer plate 420. A material of the heat preservation member 422 includes but is not limited to mica, polystyrene, or polyurethane. The heat preservation member 422 is supported between the fins 421 and the inner wall of the second cavity 412, to further improve structural strength of the heat exchange apparatus 4 without affecting heat preservation performance of the second cavity 412 in the closed state. The heat preservation member 422 may be disposed in a one-to-one correspondence with each fin 421, or may be disposed between one or some of the fins 421 and the inner wall of the second cavity 412. This is not specifically limited in this application.

In addition, a first heat insulation layer 4126 may be laid on the inner wall on the side that is of the second cavity 412 and that is away from the first cavity 411. A material of the first heat insulation layer 4126 includes but is not limited to aluminum foil, aerogel, or polyurethane foam. When the second cavity 412 is in the closed state, the first heat insulation layer 4126 can reduce heat transfer between the second cavity 412 and an external environment, and reduce thermal conductivity of the second cavity 412 in a thickness direction of the second cavity 412, so as to help improve a heat preservation effect of the second cavity 412. Similarly, a second heat insulation layer 4127 may be further disposed on an outer wall on the side that is of the second cavity 412 and that is away from the first cavity 411, to further reduce heat transfer between the second cavity 412 and the external environment. For example, a material of the second heat insulation layer 4127 includes but is not limited to aerogel or polyurethane foam.

It can be learned from the foregoing description that according to the heat exchange apparatus 4 provided in this embodiment, open or closed states of the second inlet and the second outlet may be adjusted, so that the second cavity 412 is switched between the ventilated state and the closed state, to meet heat exchange or heat preservation requirements of the battery pack in different environmental conditions, and improve performance and use safety of the battery pack. For example, when a temperature of the battery pack is high, but an ambient temperature is low, the second cavity 412 may be adjusted to the ventilated state to perform heat dissipation for the battery back by using a natural cooling source, to reduce energy consumption of the heat exchange apparatus 4 while implementing heat dissipation for the battery pack. When the temperature of the battery pack falls within a proper temperature range, but the ambient temperature is low or high, the second cavity 412 may be adjusted to the closed state, to reduce impact of the external ambient temperature on the battery pack, and implement a heat preservation function for the battery pack.

With reference to FIG. 8, an embodiment of this application further provides a heat exchange device 110 including the foregoing heat exchange apparatus. The heat exchange device 110 may further include a drive component 5. The drive component 5 may be configured to: drive a first sealing element 4123 to open or close a second inlet, and drive a second sealing element 4124 to open or close a second outlet, to reduce operation difficulty of switching a second cavity between a ventilated state and a closed state.

For example, when the first sealing element 4123 is rotatably disposed on the heat exchange apparatus 4 by using a rotating shaft, an output shaft of the drive component 5 may be connected to the rotating shaft through transmission, to drive the rotating shaft to rotate to drive the first sealing element 4123 to synchronously rotate, so as to open or close the second inlet. When the first sealing element 4123 is slidably disposed on the heat exchange apparatus 4, the heat exchange apparatus 4 may further include a transmission component that can convert rotational motion into linear motion, for example, a lead screw, a gear, or a rack, and an output shaft of the drive component 5 may be connected to the first sealing element 4123 through transmission by using such a transmission component, to drive the first sealing element 4123 to open or close the second inlet in a sliding process. For a transmission connection manner between the drive component 5 and the second sealing element 4124, refer to the first sealing element 4123. Details are not described herein.

In this embodiment of this application, the first sealing element 4123 and the second sealing element 4124 may be driven by using a same drive component 5, or may be respectively driven by using separate drive components 5, or a plurality of drive components may be configured for each sealing element. For example, in the embodiment shown in FIG. 8, the first sealing element 4123 and the second sealing element 4124 are respectively driven by using two drive components 5. This helps improve reliability of driving the first sealing element 4123 and the second sealing element 4124. The drive component 5 may include two independent parts that are respectively configured to drive the first sealing element 4123 and the second sealing element 4124, or may be a drive component that is disposed as a whole and that drives both the first sealing element 4123 and the second sealing element 4124.

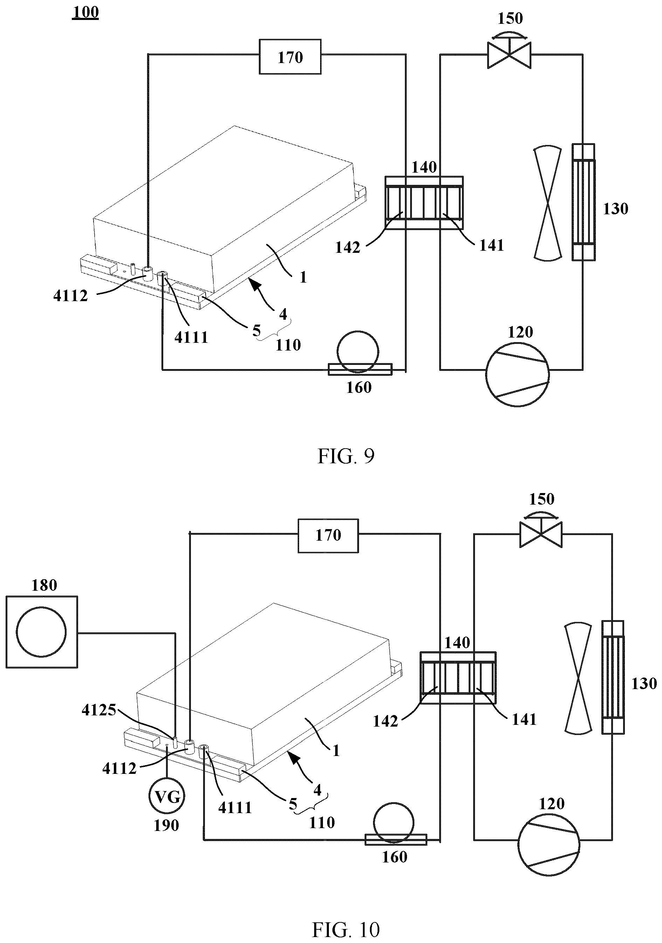

Based on the heat exchange device provided in the foregoing embodiment, an embodiment of this application further provides a thermal management system 100. FIG. 9 is a schematic diagram of a structure of a thermal management system according to an embodiment of this application. In this embodiment, in addition to a heat exchange device 110, the thermal management system may further include a compressor 120, a condenser 130, a cooler 140, an expansion valve 150, and a circulating pump 160. The cooler 140 may be a dual-runner heat exchanger, for example, a plate heat exchanger. The cooler 140 may include a first runner 141 and a second runner 142. The first runner 141 and the second runner 142 are isolated from each other, and can be used for heat exchange.

With reference to both FIG. 8 and FIG. 9, during specific disposition, an outlet of the compressor 120 may be connected to an inlet of the condenser 130, an outlet of the condenser 130 may be connected to an inlet of the first runner 141 of the cooler 140 through the expansion valve 150, and an outlet of the first runner 141 of the cooler 140 may be connected to an inlet of the compressor 120. In this case, the compressor 120, the condenser 130, the expansion valve 150, and the first runner 141 of the cooler 140 may be sequentially connected to form a first circulation loop. In addition, an outlet of the circulating pump 160 may be connected to a first inlet 4111 of a first cavity, a first outlet 4112 of the first cavity may be connected to an inlet of the second runner 142 of the cooler 140, and an outlet of the second runner 142 of the cooler 140 may be connected to an inlet of the circulating pump 160. In this case, the circulating pump 160, the first cavity 411 of a heat exchange apparatus 4, and the second runner 142 of the cooler 140 may be sequentially connected to form a second circulation loop. For example, a working medium in the first circulation loop may be a refrigerant, for example, R134a, R1234yf, or R744, and a heat exchange medium in the second circulation loop may be a coolant, for example, a glycol aqueous solution.

In some embodiments, the first circulation loop and the second circulation loop may cooperate to perform heat dissipation for a battery pack 1. In this case, the thermal management system 100 is in a liquid cooling mode. The compressor 120 drives the coolant to circulate in the first circulation loop. The refrigerant evaporates and exchanges heat with the high-temperature coolant in the second runner 142 in the first runner 141 of the cooler 140, and then has a higher temperature and changes to a low-pressure gas state. After entering the compressor 120, the heated gaseous coolant is compressed into high-temperature and high-pressure gas through the compressor 120, and then enters the condenser 130. In the condenser 130, the gas is condensed and exchanges heat with an external environment, and becomes low-temperature and high-pressure liquid. Then, the liquid is throttled and expanded through the expansion valve 150 for rapid cooling, becomes low-temperature and low-pressure liquid, and then enters the first runner 141 of the cooler 140 again to exchange heat with the high-temperature coolant in the second runner 142, to complete a cycle. In addition, the circulating pump 160 also drives the coolant to circulate in the second circulation loop. The high-temperature coolant in the second runner 142 of the cooler 140 exchanges heat with the low-temperature refrigerant in the first runner 141 for cooling, then enters the first cavity 411 of the heat exchange apparatus 4 under driving of the circulating pump 160, evaporates and exchanges heat with the battery pack 1 to absorb heat of the battery pack 1, then has a higher temperature, and then enters the second runner 142 of the cooler 140 again to exchange heat with the low-temperature refrigerant in the first runner 141. The battery pack 1 is cooled by transferring the heat to the heat exchange apparatus 4.

In some other embodiments, the thermal management system 100 may perform heat dissipation for a battery pack 1 by using a natural cooling source, that is, the thermal management system 100 performs heat dissipation for the battery pack 1 in an air cooling mode. In this case, a second cavity 412 may be adjusted to a ventilated state, and the compressor 120 and the circulating pump 160 are turned off, so that the first circulation loop and the second circulation loop stop running. Air at a bottom of a vehicle may enter the second cavity 412, and perform convection heat exchange with a wall surface of the second cavity 412, and the second cavity 412 may indirectly exchange heat with the battery pack 1 through the first cavity 411, to further transfer a cooling capacity of the air to the battery pack 1, so as to cool the battery pack 1.

Certainly, in some other implementations, the thermal management system 100 may perform heat dissipation for a battery pack in a liquid cooling and air cooling compound mode. For example, when a temperature of the battery pack 1 is high, but an ambient temperature is lower than a temperature of the coolant entering the first cavity 411, a second cavity 412 may be adjusted to a ventilated state, and the compressor 120 and the circulating pump 160 are turned on. In this case, the ambient temperature is low. Therefore, a heat dissipation effect of the heat exchange apparatus 4 for the battery pack 1 can be improved, and energy consumption of the first circulation loop and the second circulation loop can be reduced.

The thermal management system 100 can not only implement heat dissipation for the battery pack 1, but also implement heat preservation and heating for the battery pack 1. A heat preservation function may be implemented by adjusting the second cavity 412 to a closed state, and a heating function may be implemented by disposing a heater 170 in the second circulation loop. In an implementation, the heater 170 may be connected between the first cavity 411 and the second runner 142 of the cooler 140. When the temperature of the battery pack 1 is low, the compressor 120 may be turned off, and the circulating pump 160 and the heater 170 are turned on. In this case, the first circulation loop stops running, the circulating pump 160 drives the coolant to circulate in the second circulation loop, and the second runner 142 of the cooler 140 is equivalent to a path. The low-temperature coolant is heated in the heater 170, then enters the first cavity 411 of the heat exchange apparatus 4 under driving of the circulating pump 160, is condensed and exchanges heat with the battery pack 1 to transfer heat to the battery pack 1, and then enters the heater 170 again for heating. In addition, the battery pack 1 is heated by absorbing the heat of the coolant.

It may be understood that when the temperature of the battery pack 1 is low, but the ambient temperature is high, the thermal management system 100 may heat the battery pack 1 by using a natural heat source. In this case, the second cavity 412 may be adjusted to the ventilated state, and the compressor 120 and the circulating pump 160 are turned off, so that the first circulation loop and the second circulation loop stop running. Air at a bottom of a vehicle may enter the second cavity 412, and perform convection heat exchange with a wall surface of the second cavity 412, and the second cavity 412 may indirectly exchange heat with the battery pack 1 through the first cavity 411, to further transfer heat of the air to the battery pack 1, so as to heat the battery pack 1.

As described above, when the temperature of the battery pack falls within a proper temperature range, but the ambient temperature is low or high, the second cavity 412 may be adjusted to the closed state, so that the heat exchange apparatus 4 implements a heat preservation function for the battery pack 1. In addition, to improve a heat preservation effect, the second cavity 412 may be changed to a vacuum state through extraction by using a vacuum exhaust port 4125 disposed in the second cavity 412. With reference to both FIG. 8 and FIG. 10, FIG. 10 is a schematic diagram of a structure of another thermal management system according to an embodiment of this application. The thermal management system may further include a vacuum pump 180. An air intake port of the vacuum pump 180 may be connected to the vacuum exhaust port 4125 of the second cavity 412, to extract air in the second cavity 412 when the second cavity 412 is in the closed state.

In some possible embodiments, the thermal management system 100 may further include a vacuum gauge 190, and the vacuum gauge 190 may be configured to detect a vacuum degree in the second cavity 412. In this case, a vacuum gauge interface 4128 that communicates with the second cavity 412 may be disposed on the housing 410, and the vacuum gauge 190 is installed at the vacuum gauge interface 4128. Similar to the vacuum exhaust port 4125, the vacuum gauge interface 4128 may be directly disposed on a wall surface on a side that is of the second cavity 412 and that faces away from the first cavity 411, or may be disposed on a wall surface on a side that is of the first cavity 411 and that faces away from the second cavity 412, and is connected to the second cavity 412 by using an extension tube that penetrates through the first cavity 411. By disposing the vacuum gauge 190, the vacuum degree in the second cavity 412 in the closed state may be detected in real time, so that an on/off state of the vacuum pump 180 may be adjusted based on the vacuum degree in the second cavity 412.

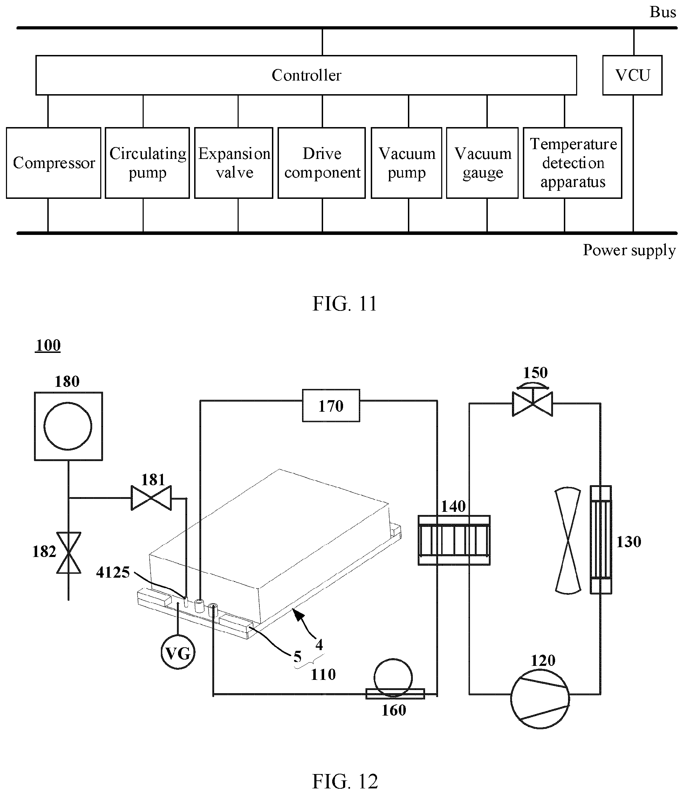

FIG. 11 is a diagram of a control principle of a thermal management system according to an embodiment of this application. With reference to both FIG. 10 and FIG. 11, in this embodiment of this application, the thermal management system 100 may further include a controller and a temperature detection apparatus. The temperature detection apparatus may be configured to detect the ambient temperature and the temperature of the battery pack 1. The controller may be separately connected to the compressor 120, the circulating pump 160, the expansion valve 150, the vacuum pump 180, the vacuum gauge 190, a drive component 5, and the temperature detection apparatus, to adjust working statuses of the foregoing components based on the ambient temperature and the temperature of the battery pack 1, so as to adjust a working mode of the thermal management system 100. In an implementation, the compressor 120, the circulating pump 160, the expansion valve 150, the vacuum pump 180, the vacuum gauge 190, the drive component 5, and the temperature detection apparatus may be connected to the controller by using a local interconnect network (LIN) bus or a controller area network (CAN) bus, to implement a communication function between each other. In addition, the controller of the thermal management system 100 may be further connected to another controller by using a bus of the vehicle, for example, connected to a vehicle control unit (VCU), a domain controller, a vehicle-mounted computer, or a vehicle-mounted communication box, to implement communication with the another controller of the vehicle. The bus may be an Ethernet bus, a CAN bus, or the like.

In this embodiment of this application, the temperature of the battery pack 1 may be classified into three temperature intervals: a first temperature interval, a second temperature interval, and a third temperature interval. The first temperature interval is a proper temperature interval of the battery pack 1, or may be understood as an optimal temperature interval in which the battery pack 1 can maintain excellent performance. For example, the first temperature interval may range from 20°C to 35°C. The second temperature interval is a temperature interval in which a temperature value is less than a smallest value in the first temperature interval. For example, the second temperature interval may be an interval in which a temperature value is less than 20°C. The third temperature interval is a temperature interval in which a temperature value is greater than a largest value in the first temperature interval. For example, the third temperature interval may be an interval in which a temperature value is greater than 35°C. With reference to FIG. 8 and FIG. 10 again, several working modes of the thermal management system 100 existing when the temperature of the battery pack falls within the foregoing several temperature intervals are specifically described below with reference to the ambient temperature.

When the temperature of the battery pack 1 falls within the proper first temperature interval, two control modes may be used. One mode is that the ambient temperature is not considered, and the other mode is that different control policies are implemented with reference to the ambient temperature. A case in which the ambient temperature is not considered is first described. In this case, the battery pack 1 is already within the proper temperature interval of the battery pack 1. Therefore, the controller may control the compressor 120 and the circulating pump 160 to be turned off, and control the drive component 5 to drive a first sealing element 4123 to close a second inlet, and to drive a second sealing element 4124 to close a second outlet, to adjust the second cavity 412 to the closed state, and perform heat preservation for the battery pack 1 by using the heat exchange apparatus 4, so that the battery pack 1 continues to be kept within the proper temperature interval of the battery pack 1.

In addition, when the second cavity 412 is in the closed state, the controller may further control the vacuum pump 180 to be turned on, to change the second cavity 412 to the vacuum state through extraction, so as to improve a heat preservation effect of the second cavity 412. When the vacuum degree in the second cavity 412 is greater than or equal to a vacuum degree threshold, the vacuum pump 180 is controlled to be turned off. The vacuum degree threshold may be set based on a heat preservation requirement or experience of the battery pack 1. This is not specifically limited in this application. In the following working modes, when the second cavity 412 is in the closed state, the vacuum degree in the second cavity 412 may be controlled based on the foregoing logic. Details are not described.

If the ambient temperature is considered, when the temperature of the battery pack 1 falls within the first temperature interval, and the ambient temperature is less than a first temperature threshold, the controller may control the compressor 120 and the circulating pump 160 to be turned off, and control the drive component 5 to drive a first sealing element 4123 to close a second inlet, and to drive a second sealing element 4124 to close a second outlet, to adjust the second cavity 412 to the closed state. The first temperature threshold may not be greater than the smallest value in the first temperature interval. For example, the first temperature threshold may be 20°C or less. In this case, the ambient temperature is low. Therefore, the second cavity 412 is adjusted to the closed state, so that the battery pack 1 can be thermally isolated from external air, to reduce adverse impact of an external low temperature on the battery pack 1.

When the temperature of the battery pack 1 falls within the first temperature interval, and the ambient temperature is greater than or equal to a first temperature threshold and less than or equal to a second temperature threshold, the controller may control the compressor 120 and the circulating pump 160 to be turned off, and control the drive component 5 to drive a first sealing element 4123 to open a second inlet, and to drive a second sealing element 4124 to open a second outlet, to adjust the second cavity 412 to the ventilated state. The second temperature threshold may not be greater than the largest value in the first temperature interval. For example, the second temperature threshold may be 35°C or less. In this condition, the ambient temperature does not greatly differ from the temperature of the battery pack 1. Therefore, the second cavity 412 is adjusted to the ventilated state, to help keep the battery pack 1 within a proper temperature interval of the battery pack 1.

When the temperature of the battery pack 1 falls within the first temperature interval, and the ambient temperature is greater than a second temperature threshold, the controller may control the compressor 120 and the circulating pump 160 to be turned on, and control the drive component 5 to drive a first sealing element 4123 to close a second inlet, and to drive a second sealing element 4124 to close a second outlet, to adjust the second cavity 412 to the closed state. In this condition, the external ambient temperature is high. Therefore, heat dissipation may be performed for the battery pack 1 in the liquid cooling mode, and the second cavity 412 is adjusted to the closed state, so that the battery pack 1 can be thermally isolated from external air, to reduce adverse impact of an external high temperature on the battery pack 1.

When the temperature of the battery pack 1 falls within the second temperature interval, and a difference between the ambient temperature and the temperature of the battery pack is greater than or equal to a temperature difference threshold, the controller may control the compressor 120 and the circulating pump 160 to be turned off, and control the drive component 5 to drive the first sealing element 4123 to open the second inlet, and to drive the second sealing element 4124 to open the second outlet, to adjust the second cavity 412 to the ventilated state. The temperature difference threshold may be determined based on a temperature control requirement of the battery pack 1 or experience. This is not limited in this application. For example, in this embodiment, the temperature difference threshold may be 2°C. In this condition, the temperature of the battery pack 1 is low, and the ambient temperature is clearly higher than the temperature of the battery pack 1. Therefore, the second cavity 412 may be adjusted to the ventilated state, to heat the battery pack 1 by using a natural heat source.

When the temperature of the battery pack 1 falls within the second temperature interval, and a difference between the ambient temperature and the temperature of the battery pack is less than a temperature difference threshold, the controller may control the drive component 5 to drive the first sealing element 4123 to close the second inlet, and to drive the second sealing element 4124 to close the second outlet, to adjust the second cavity 412 to the closed state. In this condition, the temperature of the battery pack 1 is low, and the ambient temperature is close to the temperature of the battery pack 1. Therefore, the second cavity 412 is adjusted to the closed state, so that the battery pack 1 can be thermally isolated from external air, to reduce impact of an external low temperature on the battery pack 1. In this case, if the temperature of the battery pack 1 is excessively low, the controller may control the compressor 120 to be turned off, and control the circulating pump 160 and the heater 170 to be turned on, to heat the battery pack 1 by using the heater 170, so that the battery pack 1 can normally work.

When the temperature of the battery pack 1 falls within the third temperature interval, and the ambient temperature is less than the first temperature threshold, the controller may control the compressor 120 and the circulating pump 160 to be turned on, and control the drive component 5 to drive the first sealing element 4123 to open the second inlet, and to drive the second sealing element 4124 to open the second outlet, to adjust the second cavity 412 to the ventilated state. In this condition, the temperature of the battery pack 1 is high, and the ambient temperature is low. Therefore, heat dissipation may be performed for the battery pack 1 in the liquid cooling and air cooling compound mode, to make full use of a natural cooling source, so as to reduce energy consumption of the thermal management system 100 while implementing heat dissipation for the battery pack 1.

When the temperature of the battery pack 1 falls within the third temperature interval, and the ambient temperature is greater than or equal to the first temperature threshold, the controller may control the compressor 120 and the circulating pump 160 to be turned on, and control the drive component 5 to drive the first sealing element 4123 to close the second inlet, and to drive the second sealing element 4124 to close the second outlet, to adjust the second cavity 412 to the closed state. In this condition, the ambient temperature is high. Therefore, the second cavity 412 may be adjusted to the closed state, so that the battery pack 1 is thermally isolated from external air, and the compressor 120 and the circulating pump 160 are turned on, to separately perform heat dissipation for the battery pack 1 in the liquid cooling mode, so as to achieve a good heat dissipation effect.

FIG. 12 is a schematic diagram of a structure of another thermal management system according to an embodiment of this application. In this embodiment, the thermal management system may further include a first vacuum valve 181 and a second vacuum valve 182. The first vacuum valve 181 may be connected between the air intake port of the vacuum pump 180 and the vacuum exhaust port 4125 of the second cavity, and the second vacuum valve 182 may be connected between the air intake port of the vacuum pump 180 and a vacuum booster pump of the vehicle. That is, in this embodiment of this application, the thermal management system 100 and a vacuum booster braking system of the vehicle may reuse a same vacuum pump 180. An air intake loop of the thermal management system 100 is connected in parallel to an air intake loop of the braking system, and vacuum valves are separately disposed in the two air intake loops to control the air intake loops, to help reduce costs of the entire vehicle.

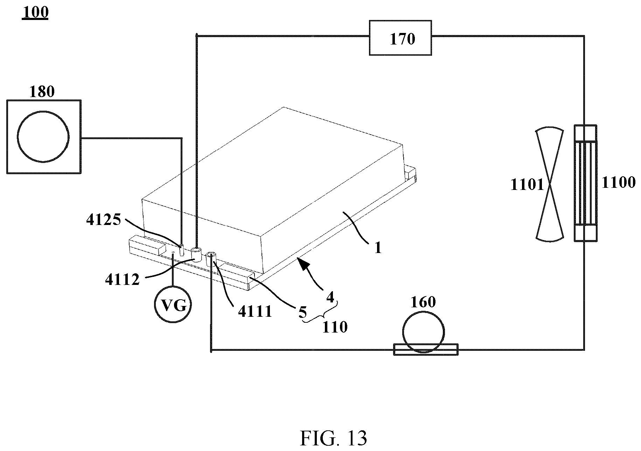

FIG. 13 is a schematic diagram of a structure of another thermal management system according to an embodiment of this application. A difference from the foregoing embodiment is that in this embodiment, in a liquid cooling mode of the thermal management system 100, a compressor is no longer used for cooling, but an air-cooled heat sink 1100 is used. In addition to the air-cooled heat sink 1100 and a heat exchange device 110, the thermal management system 100 may further include a circulating pump 160. During specific disposition, an outlet of the circulating pump 160 may be connected to a first inlet 4111 of a first cavity, a first outlet 4112 of the first cavity may be connected to an inlet of the air-cooled heat sink 1100, and an outlet of the air-cooled heat sink 1100 may be connected to an inlet of the circulating pump 160. In this way, the circulating pump 160, the first cavity of a heat exchange apparatus 4, and the air-cooled heat sink 1100 may be sequentially connected to form a circulating loop. A heat exchange medium in the circulation loop may be a coolant.

When heat dissipation is performed for a battery pack 1, the circulating pump 160 drives the coolant to circulate in the circulation loop. After entering the air-cooled heat sink 1100, the high-temperature coolant flowing out from the first cavity of the heat exchange apparatus 4 may directly exchange heat with air flowing through a surface of the air-cooled heat sink 1100 to implement cooling. The cooled coolant enters the first cavity again to evaporate and exchange heat with the battery pack 1. In this way, continuous heat dissipation can be implemented for the battery pack 1. In this design, a first circulation loop may not need to be disposed, and heat dissipation may be implemented for the coolant by using a feature of the air-cooled heat sink 1100, to help simplify a structure of the thermal management system 100.

In some embodiments, a fan 1101 may be further disposed at the air-cooled heat sink 1100, to increase a flow rate of the air flowing through the surface of the air-cooled heat sink 1100, so as to improve heat exchange efficiency of the air-cooled heat sink 1100.

Similar to the foregoing embodiment, in this embodiment, a heater 170 may also be disposed to heat the battery pack. In an implementation, the heater 170 may be connected between the first cavity and the air-cooled heat sink 1100. When a temperature of the battery pack 1 is low, the fan 1101 may be turned off, and the circulating pump 160 and the heater 170 are turned on. The circulating pump 160 drives the coolant to circulate in the loop. In this case, the air-cooled heat sink 1100 is equivalent only to a path. The low-temperature coolant is heated in the heater 170, then enters the first cavity of the heat exchange apparatus 4 under driving of the circulating pump 160, is condensed and exchanges heat with the battery pack 1 to transfer heat to the battery pack 1, and then enters the heater 170 again for heating. In addition, the battery pack 1 is heated by absorbing the heat of the coolant.

In addition, in this embodiment of this application, a controller and a temperature detection apparatus may also be disposed, to adjust working statuses of the foregoing components based on an ambient temperature and the temperature of a battery pack, so as to adjust a working mode of the thermal management system. Specific control logic may be set with reference to the foregoing embodiment. Details are not described herein.

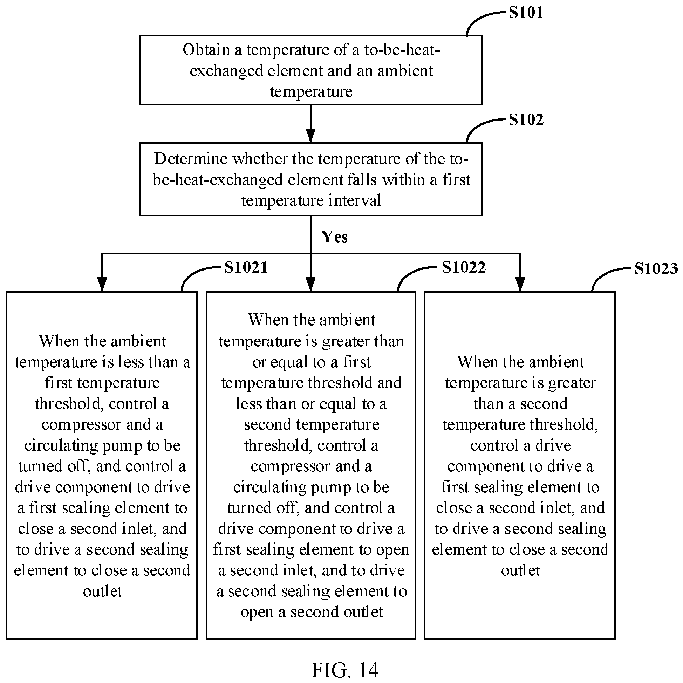

Based on a same technical concept, an embodiment of this application further provides a control method for a thermal management system. For a structure of the thermal management system, refer to the description in the foregoing embodiments. Details are not described herein. With reference to FIG. 14, the control method may include the following steps.

Step S101: Obtain a temperature of a to-be-heat-exchanged element and an ambient temperature.

Step S102: Determine whether the temperature of the to-be-heat-exchanged element falls within a first temperature interval. If the temperature of the to-be-heat-exchanged element falls within the first temperature interval, steps S1021 to S1023 are performed.

Step S1021: When the ambient temperature is less than a first temperature threshold, control a compressor and a circulating pump to be turned off, and control a drive component to drive a first sealing element to close a second inlet, and to drive a second sealing element to close a second outlet.

Step S1022: When the ambient temperature is greater than or equal to a first temperature threshold and less than or equal to a second temperature threshold, control a compressor and a circulating pump to be turned off, and control a drive component to drive a first sealing element to open a second inlet, and to drive a second sealing element to open a second outlet.

Step S1023: When the ambient temperature is greater than a second temperature threshold, control a drive component to drive a first sealing element to close a second inlet, and to drive a second sealing element to close a second outlet.

The to-be-heat-exchanged element may be a battery pack of a vehicle, or may be another element that requires heat dissipation or heat preservation. This is not specifically limited in this application. The first temperature interval is a proper temperature interval of the to-be-heat-exchanged element. For example, the first temperature interval may range from 20°C to 35°C. The first temperature threshold may not be greater than a smallest value in the first temperature interval. For example, the first temperature threshold may be 20°C or less. The second temperature threshold may not be greater than a largest value in the first temperature interval. For example, the second temperature threshold may be 35°C or less.

When the temperature of the to-be-heat-exchanged element falls within the first temperature interval, and the ambient temperature is low, a second cavity is adjusted to a closed state, so that the to-be-heat-exchanged element can be thermally isolated from external air, to reduce adverse impact of an external low temperature on the to-be-heat-exchanged element. When the ambient temperature does not greatly differ from the temperature of the to-be-heat-exchanged element, the second cavity is adjusted to a ventilated state, to help keep the to-be-heat-exchanged element within a proper temperature interval of the to-be-heat-exchanged element. When the ambient temperature is high, heat dissipation may be performed for the to-be-heat-exchanged element in a liquid cooling mode, and the second cavity is adjusted to the closed state, so that the to-be-heat-exchanged element can be thermally isolated from external air, to reduce adverse impact of an external high temperature on the to-be-heat-exchanged element.

In addition, when the second cavity is in the closed state, a vacuum pump may be further controlled to be turned on, to change the second cavity to a vacuum state through extraction, so as to improve a heat preservation effect of the second cavity. When a vacuum degree in the second cavity is greater than or equal to a vacuum degree threshold, the vacuum pump is controlled to be turned off. The vacuum degree threshold may be set based on a heat preservation requirement of the to-be-heat-exchanged element or experience. This is not specifically limited in this application. In the following control modes, when the second cavity is in the closed state, the vacuum degree in the second cavity may be controlled according to the foregoing method. Details are not described.

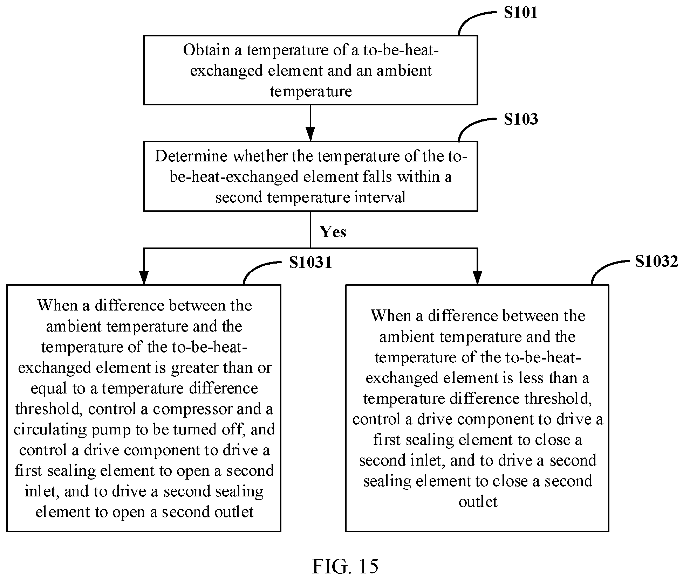

With reference to FIG. 15, after step S101 is performed, the control method may further include the following steps.

Step S103: Determine whether the temperature of the to-be-heat-exchanged element falls within a second temperature interval. If the temperature of the to-be-heat-exchanged element falls within the second temperature interval, steps S1031 and S1032 are performed.

Step S1031: When a difference between the ambient temperature and the temperature of the to-be-heat-exchanged element is greater than or equal to a temperature difference threshold, control the compressor and the circulating pump to be turned off, and control the drive component to drive the first sealing element to open the second inlet, and to drive the second sealing element to open the second outlet.

Step S1032: When a difference between the ambient temperature and the temperature of the to-be-heat-exchanged element is less than a temperature difference threshold, control the drive component to drive the first sealing element to close the second inlet, and to drive the second sealing element to close the second outlet.

The second temperature interval is a temperature interval in which a temperature value is less than the smallest value in the first temperature interval. For example, the second temperature interval may be an interval in which a temperature value is less than 20°C. In this interval, the temperature of the to-be-heat-exchanged element is low. When the ambient temperature is clearly higher than the temperature of the to-be-heat-exchanged element, the second cavity may be adjusted to the ventilated state, to heat the to-be-heat-exchanged element by using a natural heat source. When the ambient temperature is close to the temperature of the to-be-heat-exchanged element, the second cavity is adjusted to the closed state, so that the to-be-heat-exchanged element can be thermally isolated from external air, to reduce impact of an external low temperature on the to-be-heat-exchanged element.

When the temperature of the to-be-heat-exchanged element is excessively low, step S1032 may further include:
controlling the compressor to be turned off, and controlling the circulating pump and a heater to be turned on, to heat the to-be-heat-exchanged element by using the heater, so that the to-be-heat-exchanged element can normally work.

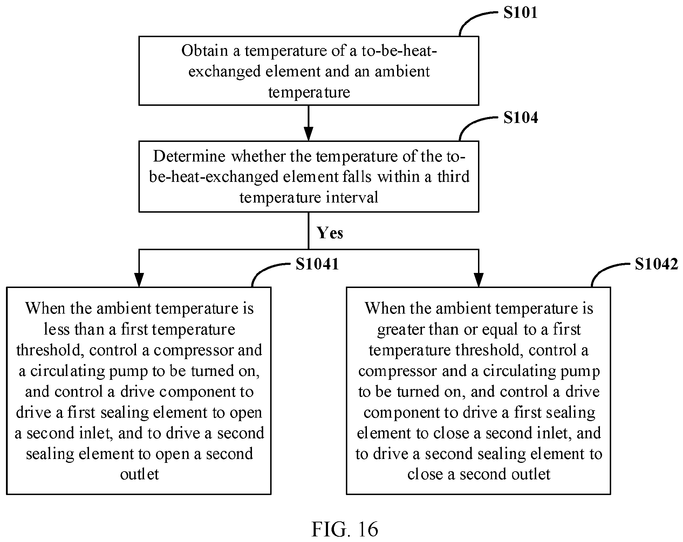

With reference to FIG. 16, after step S101 is performed, the control method may further include the following steps.

Step S104: Determine whether the temperature of the to-be-heat-exchanged element falls within a third temperature interval. If the temperature of the to-be-heat-exchanged element falls within the third temperature interval, steps S1041 and S1042 are performed.

Step S1041: When the ambient temperature is less than the first temperature threshold, control the compressor and the circulating pump to be turned on, and control the drive component to drive the first sealing element to open the second inlet, and to drive the second sealing element to open the second outlet.

Step S1042: When the ambient temperature is greater than or equal to the first temperature threshold, control the compressor and the circulating pump to be turned on, and control the drive component to drive the first sealing element to close the second inlet, and to drive the second sealing element to close the second outlet.

The third temperature interval is a temperature interval in which a temperature value is greater than the largest value in the first temperature interval. For example, the third temperature interval may be an interval in which a temperature value is greater than 35°C. In this interval, the temperature of the to-be-heat-exchanged element is high. When the ambient temperature is low, heat dissipation may be performed for the to-be-heat-exchanged element in a liquid cooling and air cooling compound mode, to make full use of a natural cooling source, so as to reduce energy consumption of the thermal management system while implementing heat dissipation for the to-be-heat-exchanged element. When the ambient temperature is high, the second cavity may be adjusted to the closed state, so that the to-be-heat-exchanged element is thermally isolated from external air, and the compressor and the circulating pump are turned on, to separately perform heat dissipation for the to-be-heat-exchanged element in a liquid cooling mode, so as to achieve a good heat dissipation effect.

Based on a same technical concept, an embodiment of this application further provides a control apparatus for a thermal management system. For a structure of the thermal management system, refer to the description in the foregoing embodiments. Details are not described herein. The control apparatus may include a communication unit and a processing unit.

The communication unit is configured to obtain a temperature of a to-be-heat-exchanged element and an ambient temperature.

The processing unit is configured to: when the temperature of the to-be-heat-exchanged element falls within a first temperature interval, and the ambient temperature is less than a first temperature threshold, control a compressor and a circulating pump to be turned off, and control a drive component to drive a first sealing element to close a second inlet, and to drive a second sealing element to close a second outlet; when the temperature of the to-be-heat-exchanged element falls within a first temperature interval, and the ambient temperature is greater than or equal to a first temperature threshold and less than or equal to a second temperature threshold, control a compressor and a circulating pump to be turned off, and control a drive component to drive a first sealing element to open a second inlet, and to drive a second sealing element to open a second outlet; or when the temperature of the to-be-heat-exchanged element falls within a first temperature interval, and the ambient temperature is greater than a second temperature threshold, control a drive component to drive a first sealing element to close a second inlet, and to drive a second sealing element to close a second outlet.

The to-be-heat-exchanged element may be a battery pack of a vehicle, or may be another element that requires heat dissipation or heat preservation. This is not specifically limited in this application. The first temperature interval is a proper temperature interval of the to-be-heat-exchanged element. For example, the first temperature interval may range from 20°C to 35°C. The first temperature threshold may not be greater than a smallest value in the first temperature interval. For example, the first temperature threshold may be 20°C or less. The second temperature threshold may not be greater than a largest value in the first temperature interval. For example, the second temperature threshold may be 35°C or less.

When the temperature of the to-be-heat-exchanged element falls within the first temperature interval, and the ambient temperature is low, a second cavity is adjusted to a closed state, so that the to-be-heat-exchanged element can be thermally isolated from external air, to reduce adverse impact of an external low temperature on the to-be-heat-exchanged element. When the ambient temperature does not greatly differ from the temperature of the to-be-heat-exchanged element, the second cavity is adjusted to a ventilated state, to help keep the to-be-heat-exchanged element within a proper temperature interval of the to-be-heat-exchanged element. When the ambient temperature is high, heat dissipation may be performed for the to-be-heat-exchanged element in a liquid cooling mode, and the second cavity is adjusted to the closed state, so that the to-be-heat-exchanged element can be thermally isolated from external air, to reduce adverse impact of an external high temperature on the to-be-heat-exchanged element.

In addition, when the second cavity is in the closed state, the processing unit may be further configured to: control a vacuum pump to be turned on, to change the second cavity to a vacuum state through extraction, so as to improve a heat preservation effect of the second cavity, and control, when a vacuum degree in the second cavity is greater than or equal to a vacuum degree threshold, the vacuum pump to be turned off.

In some embodiments, the processing unit may be further configured to: when the temperature of the to-be-heat-exchanged element falls within a second temperature interval, and a difference between the ambient temperature and the temperature of the to-be-heat-exchanged element is greater than or equal to a temperature difference threshold, control the compressor and the circulating pump to be turned off, and control the drive component to drive the first sealing element to open the second inlet, and to drive the second sealing element to open the second outlet; or when the temperature of the to-be-heat-exchanged element falls within a second temperature interval, and a difference between the ambient temperature and the temperature of the to-be-heat-exchanged element is less than a temperature difference threshold, control the drive component to drive the first sealing element to close the second inlet, and to drive the second sealing element to close the second outlet.

The second temperature interval is a temperature interval in which a temperature value is less than the smallest value in the first temperature interval. For example, the second temperature interval may be an interval in which a temperature value is less than 20°C. In this interval, the temperature of the to-be-heat-exchanged element is low. When the ambient temperature is clearly higher than the temperature of the to-be-heat-exchanged element, the second cavity may be adjusted to the ventilated state, to heat the to-be-heat-exchanged element by using a natural heat source. When the ambient temperature is close to the temperature of the to-be-heat-exchanged element, the second cavity is adjusted to the closed state, so that the to-be-heat-exchanged element can be thermally isolated from external air, to reduce impact of an external low temperature on the to-be-heat-exchanged element. In addition, when the temperature of the to-be-heat-exchanged element is excessively low, the processing unit may be further configured to: control the compressor to be turned off, and control the circulating pump and a heater to be turned on, to heat the to-be-heat-exchanged element by using the heater, so that the to-be-heat-exchanged element can normally work.

In some embodiments, the processing unit may be further configured to: when the temperature of the to-be-heat-exchanged element falls within a third temperature interval, and the ambient temperature is less than the first temperature threshold, control the compressor and the circulating pump to be turned on, and control the drive component to drive the first sealing element to open the second inlet, and to drive the second sealing element to open the second outlet; or when the temperature of the to-be-heat-exchanged element falls within a third temperature interval, and the ambient temperature is greater than or equal to the first temperature threshold, control the compressor and the circulating pump to be turned on, and control the drive component to drive the first sealing element to close the second inlet, and to drive the second sealing element to close the second outlet.

The third temperature interval is a temperature interval in which a temperature value is greater than the largest value in the first temperature interval. For example, the third temperature interval may be an interval in which a temperature value is greater than 35°C. In this interval, the temperature of the to-be-heat-exchanged element is high. When the ambient temperature is low, heat dissipation may be performed for the to-be-heat-exchanged element in a liquid cooling and air cooling compound mode, to make full use of a natural cooling source, so as to reduce energy consumption of the thermal management system while implementing heat dissipation for the to-be-heat-exchanged element. When the ambient temperature is high, the second cavity may be adjusted to the closed state, so that the to-be-heat-exchanged element is thermally isolated from external air, and the compressor and the circulating pump are turned on, to separately perform heat dissipation for the to-be-heat-exchanged element in a liquid cooling mode, so as to achieve a good heat dissipation effect.

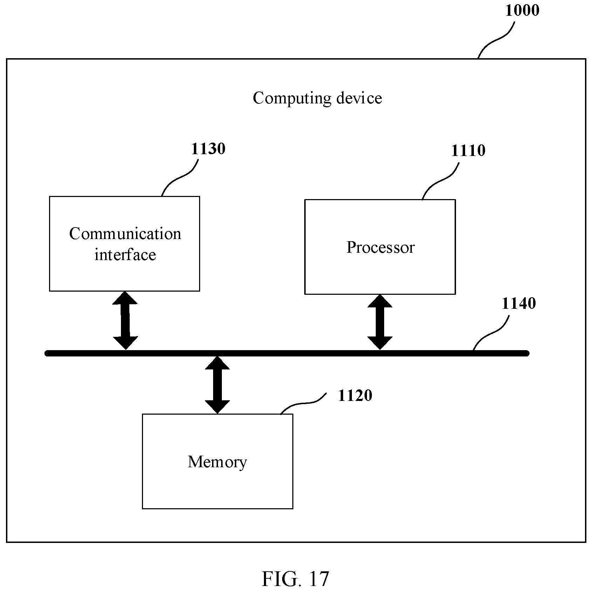

With reference to FIG. 17, based on a same technical concept, an embodiment of this application further provides a computing device 1000. The computing device 1000 may be a chip or a chip system. Optionally, in this embodiment of this application, the chip system may include a chip, or may include a chip and another discrete device.

The computing device 1000 may include at least one processor 1110. The processor 1110 is coupled to a memory. Optionally, the memory may be located in the computing device, the memory may be integrated with the processor, or the memory may be located outside the apparatus. For example, the computing device 1000 may further include at least one memory 1120. The memory 1120 stores a computer program, configuration information, a computer program or instructions, and/or data necessary for implementing any one of the foregoing embodiments. The processor 1110 may execute the computer program stored in the memory 1120, to complete the method in any one of the foregoing embodiments.

The computing device 1000 may further include a communication interface 1130, and the computing device 1000 may exchange information with another device through the communication interface 1130. For example, the communication interface 1130 may be a transceiver, a circuit, a bus, a module, a pin, or another type of communication interface. When the computing device 1000 is a chip-type apparatus or circuit, the communication interface 1130 in the computing device 1000 may be an input/output circuit, and may input information (or receive information) and output information (or send information), and the processor is an integrated processor, a microprocessor, an integrated circuit, or a logic circuit, and the processor may determine output information based on input information.

Couplings in this embodiment of this application are indirect couplings or communication connections between apparatuses, units, or modules, may be in an electrical form, a mechanical form, or another form, and are used for information exchange between the apparatuses, the units, or the modules. The processor 1110 may cooperate with the memory 1120 and the communication interface 1130. A specific connection medium among the processor 1110, the memory 1120, and the communication interface 1130 is not limited in this embodiment of this application.

Optionally, with reference to FIG. 17, the processor 1110, the memory 1120, and the communication interface 1130 are connected to each other by using a bus 1140. The bus 1140 may be a peripheral component interconnect (PCI) bus, an extended industry standard architecture (EISA) bus, or the like. The bus may be classified into an address bus, a data bus, a control bus, and the like. For ease of representation, only one thick line is used to represent the bus in FIG. 17, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams in embodiments of this application. The general-purpose processor may be a microprocessor, any conventional processor, or the like. The steps of the methods provided with reference to embodiments of this application may be directly performed by a hardware processor, or may be performed by using a combination of hardware in the processor and a software module.

In this embodiment of this application, the memory may be a nonvolatile memory, for example, a hard disk drive (HDD) or a solid-state drive (SSD), or may be a volatile memory, for example, a random access memory (RAM). The memory is any other medium that can be configured to carry or store expected program code in a form of an instruction or a data structure and that can be accessed by a computer. However, this is not limited thereto. The memory in this embodiment of this application may alternatively be a circuit or any other apparatus that can implement a storage function, and is configured to store program instructions and/or data.

In a possible implementation, the computing device 1000 may be applied to a transmit end. Specifically, the computing device 1000 may be a transmit end, or may be an apparatus that can support the transmit end in implementing a function of the transmit end in any one of the foregoing embodiments. The memory 1120 stores a computer program, a computer program or instructions, and/or data necessary for implementing the function of the transmit end in any one of the foregoing embodiments. The processor 1110 may execute the computer program stored in the memory 1120, to complete the method performed by the transmit end in any one of the foregoing embodiments. In the case of application to the transmit end, the communication interface in the computing device 1000 may be configured to interact with a receive end, for example, send information to the receive end.

In another possible implementation, the computing device 1000 may be applied to a receive end. Specifically, the computing device 1000 may be a receive end, or may be an apparatus that can support the receive end in implementing a function of the receive end in any one of the foregoing embodiments. The memory 1120 stores a computer program, a computer program or instructions, and/or data necessary for implementing the function of the receive end in any one of the foregoing embodiments. The processor 1110 may execute the computer program stored in the memory 1120, to complete the method performed by the receive end in any one of the foregoing embodiments. In the case of application to the receive end, the communication interface in the computing device 1000 may be configured to interact with a transmit end, for example, receive information from the transmit end.

The computing device 1000 provided in this embodiment may be applied to the transmit end to complete the method performed by the transmit end, or may be applied to the receive end to complete the method performed by the receive end. Therefore, for technical effects that can be achieved by the computing device 1000, refer to the foregoing method embodiments. Details are not described herein.

Based on the foregoing embodiments, an embodiment of this application further provides a computer program. When the computer program runs on a computer, the computer is enabled to implement the method provided in the embodiments shown in FIG. 14 to FIG. 16.

Based on the foregoing embodiments, an embodiment of this application further provides a computer-readable storage medium. The computer-readable storage medium stores a computer program. When the computer program is executed by a computer, the computer is enabled to implement the method provided in the embodiments shown in FIG. 14 to FIG. 16. The storage medium may be any usable medium that can be accessed by the computer. The following provides an example but imposes no limitation: The computer-readable medium may include a RAM, a read-only memory (ROM), an electrically erasable programmable read-only memory (EEPROM), a CD-ROM or another optical disc storage, a magnetic disk storage medium or another magnetic storage device, or any other medium that can be configured to carry or store expected program code in a form of an instruction or a data structure and that can be accessed by the computer.

All or some of the technical solutions provided in embodiments of this application may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, an access network device, a terminal device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by a computer, or a data storage device, for example, a server or a data center, into which one or more usable media are integrated. The usable medium may be a magnetic medium (for example, a floppy disk, a hard disk, or a magnetic tape), an optical medium (for example, a digital video disc (DVD)), a semiconductor medium, or the like.

The foregoing descriptions are merely specific implementations of this application, but the protection scope of this application is not limited thereto. Therefore, the protection scope of this application shall be subject to the protection scope of the claims.

## Claims

1. A heat exchange apparatus, comprising a housing and a spacer plate disposed in the housing, wherein the spacer plate separates the housing into a first cavity and a second cavity, the first cavity is a coolant accommodation cavity and the second cavity is an air cavity;
an outer wall on a side that is of the first cavity and that is away from the second cavity is configured to be in thermally conductive contact with a to-be-heat-exchanged element, and the first cavity is provided with a first inlet and a first outlet; **characterized in that**
the second cavity is provided with a second inlet and a second outlet, a first sealing element configured to open or close the second inlet is disposed at the second inlet, and a second sealing element configured to open or close the second outlet is disposed at the second outlet, wherein the second inlet and the second outlet are disposed opposite to each other;
**in that**
the spacer plate is provided with a plurality of fins extending towards the second cavity, and an end that is of the fins and that faces away from the spacer plate is disposed at an interval from an inner wall on a side that is of the second cavity and that is away from the first cavity, and **in that** the fins extend in a direction from the second inlet to the second outlet.

2. The heat exchange apparatus according to claim 1, wherein a heat preservation member is disposed at ends that are of at least some of the fins and that face away from the spacer plate, and the heat preservation member is supported between the ribbed plate and an inner wall of the second cavity.

3. The heat exchange apparatus according to claim 1 or 2, wherein a first sealing ring is disposed at an end part of the second inlet, and when the first sealing element closes the second inlet, the first sealing ring is squeezed between the first sealing element and the end part of the second inlet; and/or
a second sealing ring is disposed at an end part of the second outlet, and when the second sealing element closes the second outlet, the second sealing ring is squeezed between the second sealing element and the end part of the second outlet.

4. The heat exchange apparatus according to any one of claims 1 to 3, wherein the housing is provided with a vacuum exhaust port that communicates with the second cavity.

5. The heat exchange apparatus according to any one of claims 1 to 3, wherein a first heat insulation layer is disposed on the inner wall on the side that is of the second cavity and that is away from the first cavity; and/or a second heat insulation layer is disposed on an outer wall on the side that is of the second cavity and that is away from the first cavity.

6. A heat exchange device, comprising a drive component and the heat exchange apparatus according to any one of claims 1 to 5, wherein the drive component is separately connected to a first sealing element and a second sealing element through transmission, and the drive component is configured to: drive the first sealing element to open or close a second inlet, and drive the second sealing element to open or close a second outlet.

7. A thermal management system, comprising a compressor, a condenser, a cooler, an expansion valve, a circulating pump, and the heat exchange device according to claim 6, wherein the cooler comprises a first runner and a second runner that are isolated from each other;
an outlet of the compressor is connected to an inlet of the condenser, an outlet of the condenser is connected to an inlet of the first runner through the expansion valve, and an outlet of the first runner is connected to an inlet of the compressor; and
an outlet of the circulating pump is connected to a first inlet of a first cavity, a first outlet of the first cavity is connected to an inlet of the second runner, and an outlet of the second runner is connected to an inlet of the circulating pump.

8. The thermal management system according to claim 7, wherein a second cavity is provided with a vacuum exhaust port; and
the thermal management system further comprises a vacuum pump, an air intake port of the vacuum pump is connected to the vacuum exhaust port, and the vacuum pump is configured to extract air from the second cavity when a first sealing element closes a second inlet and a second sealing element closes a second outlet.

9. The thermal management system according to claim 8, further comprising a temperature detection apparatus and a controller, wherein the temperature detection apparatus is configured to detect an ambient temperature and a temperature of a to-be-heat-exchanged element, and the controller is separately electrically connected to the compressor, the circulating pump, a drive component, and the temperature detection apparatus, and is configured to:
when the temperature of the to-be-heat-exchanged element falls within a first temperature interval, control the compressor and the circulating pump to be turned off, and control the drive component to drive the first sealing element to close the second inlet, and to drive the second sealing element to close the second outlet.

10. The thermal management system according to claim 8, further comprising a temperature detection apparatus and a controller, wherein the temperature detection apparatus is configured to detect an ambient temperature and a temperature of a to-be-heat-exchanged element, and the controller is separately electrically connected to the compressor, the circulating pump, a drive component, and the temperature detection apparatus, and is configured to:
when the temperature of the to-be-heat-exchanged element falls within a first temperature interval, and the ambient temperature is less than a first temperature threshold, control the compressor and the circulating pump to be turned off, and control the drive component to drive the first sealing element to close the second inlet, and to drive the second sealing element to close the second outlet;
when the temperature of the to-be-heat-exchanged element falls within a first temperature interval, and the ambient temperature is greater than or equal to a first temperature threshold and less than or equal to a second temperature threshold, control the compressor and the circulating pump to be turned off, and control the drive component to drive the first sealing element to open the second inlet, and to drive the second sealing element to open the second outlet; or
when the temperature of the to-be-heat-exchanged element falls within a first temperature interval, and the ambient temperature is greater than a second temperature threshold, control the compressor and the circulating pump to be turned on, and control the drive component to drive the first sealing element to close the second inlet, and to drive the second sealing element to close the second outlet.

11. The thermal management system according to claim 9 or 10, wherein the controller is further configured to:
when the temperature of the to-be-heat-exchanged element falls within a second temperature interval, and a difference between the ambient temperature and the temperature of the to-be-heat-exchanged element is greater than or equal to a temperature difference threshold, control the compressor and the circulating pump to be turned off, and control the drive component to drive the first sealing element to open the second inlet, and to drive the second sealing element to open the second outlet; or
when the temperature of the to-be-heat-exchanged element falls within a second temperature interval, and a difference between the ambient temperature and the temperature of the to-be-heat-exchanged element is less than a temperature difference threshold, control the drive component to drive the first sealing element to close the second inlet, and to drive the second sealing element to close the second outlet, wherein
the second temperature interval is an interval in which a temperature value is less than a smallest temperature value in the first temperature interval.

12. The thermal management system according to claim 11, further comprising a heater, wherein the heater is connected between the first cavity and the second runner; and
the controller is further electrically connected to the heater, and when the temperature of the to-be-heat-exchanged element falls within the second temperature interval, and the difference between the ambient temperature and the temperature of the to-be-heat-exchanged element is less than the temperature difference threshold, the controller is further configured to:
control the compressor to be turned off, and control the circulating pump and the heater to be turned on.

13. The thermal management system according to any one of claims 9 to 12, wherein the controller is further configured to:
when the temperature of the to-be-heat-exchanged element falls within a third temperature interval, and the ambient temperature is less than the first temperature threshold, control the compressor and the circulating pump to be turned on, and control the drive component to drive the first sealing element to open the second inlet, and to drive the second sealing element to open the second outlet; or
when the temperature of the to-be-heat-exchanged element falls within a third temperature interval, and the ambient temperature is greater than or equal to the first temperature threshold, control the compressor and the circulating pump to be turned on, and control the drive component to drive the first sealing element to close the second inlet, and to drive the second sealing element to close the second outlet, wherein
the third temperature interval is an interval in which a temperature value is greater than a largest temperature value in the first temperature interval.

14. The thermal management system according to any one of claims 9 to 13, wherein the thermal management system further comprises a vacuum gauge, and the vacuum gauge is configured to detect a vacuum degree in the second cavity; and
the controller is further electrically connected to the vacuum pump and the vacuum gauge, and is configured to:
when the drive component drives the first sealing element to close the second inlet, and drives the second sealing element to close the second outlet, and the vacuum degree in the second cavity is greater than or equal to a vacuum degree threshold, control the vacuum pump to be turned off.

15. The thermal management system according to any one of claims 9 to 14, further comprising a first vacuum valve and a second vacuum valve, wherein the first vacuum valve is connected between the air intake port of the vacuum pump and the vacuum exhaust port, and the second vacuum valve is connected between the air intake port of the vacuum pump and a vacuum booster of a vehicle.

16. A control method for a thermal management system, used to control the thermal management system according to any one of claims 7 to 15, wherein the control method comprises:
obtaining a temperature of a to-be-heat-exchanged element and an ambient temperature; and
when the temperature of the to-be-heat-exchanged element falls within a first temperature interval, and the ambient temperature is less than a first temperature threshold, controlling a compressor and a circulating pump to be turned off, and controlling a drive component to drive a first sealing element to close a second inlet, and to drive a second sealing element to close a second outlet;
when the temperature of the to-be-heat-exchanged element falls within a first temperature interval, and the ambient temperature is greater than or equal to a first temperature threshold and less than or equal to a second temperature threshold, controlling a compressor and a circulating pump to be turned off, and controlling a drive component to drive a first sealing element to open a second inlet, and to drive a second sealing element to open a second outlet; or
when the temperature of the to-be-heat-exchanged element falls within a first temperature interval, and the ambient temperature is greater than a second temperature threshold, controlling a drive component to drive a first sealing element to close a second inlet, and to drive a second sealing element to close a second outlet.

17. A vehicle, comprising a to-be-heat-exchanged element and the thermal management system according to any one of claims 7 to 15, wherein the thermal management system is configured to perform heat exchange for the to-be-heat-exchanged element.

## Patentansprüche

1. Wärmetauschervorrichtung, umfassend ein Gehäuse und eine in dem Gehäuse angeordnete Trennplatte, wobei die Trennplatte das Gehäuse in einen ersten Hohlraum und einen zweiten Hohlraum trennt, wobei der erste Hohlraum ein Kühlmittelaufnahmehohlraum ist und der zweite Hohlraum ein Lufthohlraum ist;
eine Außenwand auf einer Seite, die zu dem ersten Hohlraum gehört und von dem zweiten Hohlraum abgewandt ist, dazu eingerichtet ist, in wärmeleitendem Kontakt mit einem einem Wärmeaustausch zu unterziehenden Element zu stehen, und der erste Hohlraum mit einem ersten Einlass und einem ersten Auslass versehen ist; **dadurch gekennzeichnet, dass**
der zweite Hohlraum mit einem zweiten Einlass und einem zweiten Auslass versehen ist, ein erstes Dichtelement, das dazu eingerichtet ist, den zweiten Einlass zu öffnen oder zu schließen, an dem zweiten Einlass angeordnet ist, und ein zweites Dichtelement, das dazu eingerichtet ist, den zweiten Auslass zu öffnen oder zu schließen, an dem zweiten Auslass angeordnet ist, wobei der zweite Einlass und der zweite Auslass einander gegenüberliegend angeordnet sind;
dass die Trennplatte mit einer Vielzahl von Rippen versehen ist, die sich in Richtung des zweiten Hohlraums erstrecken, und ein Ende, das zu den Rippen gehört und die von der Trennplatte abgewandt ist, in einem Abstand von einer Innenwand auf einer Seite angeordnet ist, die zu dem zweiten Hohlraum gehört und die von dem ersten Hohlraum abgewandt ist, und dass sich die Rippen in einer Richtung von dem zweiten Einlass zu dem zweiten Auslass erstrecken.

2. Wärmetauschervorrichtung nach Anspruch 1, wobei ein Wärmehalteelement an Enden, die zu zumindest einigen der Rippen gehören und die von der Trennplatte abgewandt sind, angeordnet ist und das Wärmehalteelement zwischen der Rippenplatte und einer Innenwand des zweiten Hohlraums gestützt ist.

3. Wärmetauschervorrichtung nach Anspruch 1 oder 2, wobei ein erster Dichtungsring an einem Endteil des zweiten Einlasses angeordnet ist und wenn das erste Dichtelement den zweiten Einlass schließt, der erste Dichtungsring zwischen dem ersten Dichtelement und dem Endteil des zweiten Einlasses eingequetscht ist; und/oder
ein zweiter Dichtungsring an einem Endteil des zweiten Auslasses angeordnet ist und wenn das zweite Dichtelement den zweiten Auslass schließt, der zweite Dichtungsring zwischen dem zweiten Dichtelement und dem Endteil des zweiten Auslasses eingequetscht ist.

4. Wärmetauschervorrichtung nach einem der Ansprüche 1 bis 3, wobei das Gehäuse mit einer Vakuumabsaugöffnung versehen ist, die mit dem zweiten Hohlraum in Verbindung steht.

5. Wärmetauschervorrichtung nach einem der Ansprüche 1 bis 3, wobei eine erste Wärmedämmschicht an der Innenwand auf der Seite angeordnet ist, die zu dem zweiten Hohlraum gehört und die von dem ersten Hohlraum abgewandt ist; und/oder eine zweite Wärmedämmschicht an einer Außenwand auf der Seite angeordnet ist, die zu dem zweiten Hohlraum gehört und die von dem ersten Hohlraum abgewandt ist.

6. Wärmetauscheinrichtung, umfassend eine Antriebskomponente und die Wärmetauschervorrichtung nach einem der Ansprüche 1 bis 5, wobei die Antriebskomponente getrieblich separat mit einem ersten Dichtelement und einem zweiten Dichtelement verbunden ist und die Antriebskomponente dazu eingerichtet ist: das erste Dichtelement anzutreiben, um einen zweiten Einlass zu öffnen oder zu schließen, und das zweite Dichtelement anzutreiben, um einen zweiten Auslass zu öffnen oder zu schließen.

7. Wärmeverwaltungssystem, umfassend einen Kompressor, einen Kondensator, einen Kühler, ein Expansionsventil, eine Umwälzpumpe und die Wärmetauscheinrichtung nach Anspruch 6, wobei der Kühler einen ersten Kanal und einen zweiten Kanal umfasst, die voneinander isoliert sind;
ein Auslass des Kompressors mit einem Einlass des Kondensators verbunden ist, ein Auslass des Kondensators über das Expansionsventil mit einem Einlass des ersten Kanals verbunden ist und ein Auslass des ersten Kanals mit einem Einlass des Kompressors verbunden ist; und
ein Auslass der Umwälzpumpe mit einem ersten Einlass eines ersten Hohlraums verbunden ist, ein erster Auslass des ersten Hohlraums mit einem Einlass des zweiten Kanals verbunden ist und ein Auslass des zweiten Kanals mit einem Einlass der Umwälzpumpe verbunden ist.

8. Wärmeverwaltungssystem nach Anspruch 7, wobei ein zweiter Hohlraum mit einer Vakuumabsaugöffnung versehen ist; und
das Wärmeverwaltungssystem ferner eine Vakuumpumpe umfasst, wobei ein Luftansauganschluss der Vakuumpumpe mit der Vakuumabsaugöffnung verbunden ist und die Vakuumpumpe dazu eingerichtet ist, Luft aus dem zweiten Hohlraum abzusaugen, wenn ein erstes Dichtelement einen zweiten Einlass schließt und ein zweites Dichtelement einen zweiten Auslass schließt.

9. Wärmeverwaltungssystem nach Anspruch 8, ferner umfassend eine Temperaturerfassungsvorrichtung und eine Steuerung, wobei die Temperaturerfassungsvorrichtung dazu eingerichtet ist, eine Umgebungstemperatur und eine Temperatur eines einem Wärmeaustausch zu unterziehenden Elements zu erfassen, und die Steuerung separat elektrisch mit dem Kompressor, der Umwälzpumpe, einer Antriebskomponente und der Temperaturerfassungsvorrichtung verbunden ist und dazu eingerichtet ist:
wenn die Temperatur des einem Wärmeaustausch zu unterziehenden Elements in ein erstes Temperaturintervall fällt, den Kompressor und die Umwälzpumpe so zu steuern, dass sie ausgeschaltet sind, und die Antriebskomponente so zu steuern, dass sie das erste Dichtelement antreibt, um den zweiten Einlass zu schließen, und das zweite Dichtelement antreibt, um den zweiten Auslass zu schließen.

10. Wärmeverwaltungssystem nach Anspruch 8, ferner umfassend eine Temperaturerfassungsvorrichtung und eine Steuerung, wobei die Temperaturerfassungsvorrichtung dazu eingerichtet ist, eine Umgebungstemperatur und eine Temperatur eines einem Wärmeaustausch zu unterziehenden Elements zu erfassen, und die Steuerung separat elektrisch mit dem Kompressor, der Umwälzpumpe, einer Antriebskomponente und der Temperaturerfassungsvorrichtung verbunden ist und dazu eingerichtet ist:
wenn die Temperatur des einem Wärmeaustausch zu unterziehenden Elements in ein erstes Temperaturintervall fällt und die Umgebungstemperatur kleiner als ein erster Temperaturschwellenwert ist, den Kompressor und die Umwälzpumpe so zu steuern, dass sie ausgeschaltet sind, und die Antriebskomponente so zu steuern, dass sie das erste Dichtelement antreibt, um den zweiten Einlass zu schließen, und das zweite Dichtelement antreibt, um den zweiten Auslass zu schließen;
wenn die Temperatur des einem Wärmeaustausch zu unterziehenden Elements in ein erstes Temperaturintervall fällt und die Umgebungstemperatur größer oder gleich einem ersten Temperaturschwellenwert und kleiner oder gleich einem zweiten Temperaturschwellenwert ist, den Kompressor und die Umwälzpumpe so zu steuern, dass sie ausgeschaltet sind, und die Antriebskomponente so zu steuern, dass sie das erste Dichtelement antreibt, um den zweiten Einlass zu öffnen, und das zweite Dichtelement antreibt, um den zweiten Auslass zu öffnen; oder
wenn die Temperatur des einem Wärmeaustausch zu unterziehenden Elements in ein erstes Temperaturintervall fällt und die Umgebungstemperatur größer als ein zweiter Temperaturschwellenwert ist, den Kompressor und die Umwälzpumpe so zu steuern, dass sie eingeschaltet sind, und die Antriebskomponente so zu steuern, dass sie das erste Dichtelement antreibt, um den zweiten Einlass zu schließen, und das zweite Dichtelement antreibt, um den zweiten Auslass zu schließen.

11. Wärmeverwaltungssystem nach Anspruch 9 oder 10, wobei die Steuerung ferner dazu eingerichtet ist:
wenn die Temperatur des einem Wärmeaustausch zu unterziehenden Elements in ein zweites Temperaturintervall fällt und eine Differenz zwischen der Umgebungstemperatur und der Temperatur des einem Wärmeaustausch zu unterziehenden Elements größer oder gleich einem Temperaturdifferenzschwellenwert ist, den Kompressor und die Umwälzpumpe so zu steuern, dass sie ausgeschaltet sind, und die Antriebskomponente so zu steuern, dass sie das erste Dichtelement antreibt, um den zweiten Einlass zu öffnen, und das zweite Dichtelement antreibt, um den zweiten Auslass zu öffnen; oder
wenn die Temperatur des einem Wärmeaustausch zu unterziehenden Elements in ein zweites Temperaturintervall fällt und eine Differenz zwischen der Umgebungstemperatur und der Temperatur des einem Wärmeaustausch zu unterziehenden Elements kleiner als ein Temperaturdifferenzschwellenwert ist, die Antriebskomponente so zu steuern, dass sie das erste Dichtelement antreibt, um den zweiten Einlass zu schließen, und das zweite Dichtelement antreibt, um den zweiten Auslass zu schließen, wobei
das zweite Temperaturintervall ein Intervall ist, in dem ein Temperaturwert kleiner ist als ein kleinster Temperaturwert in dem ersten Temperaturintervall.

12. Wärmeverwaltungssystem nach Anspruch 11, ferner umfassend ein Heizelement, wobei das Heizelement zwischen den ersten Hohlraum und den zweiten Kanal geschaltet ist; und
die Steuerung ferner elektrisch mit dem Heizelement verbunden ist, und wenn die Temperatur des einem Wärmeaustausch zu unterziehenden Elements in das zweite Temperaturintervall fällt und die Differenz zwischen der Umgebungstemperatur und der Temperatur des einem Wärmeaustausch zu unterziehenden Elements kleiner als der Temperaturdifferenzschwellenwert ist, die Steuerung ferner dazu eingerichtet ist:
den Kompressor so zu steuern, dass er ausgeschaltet ist, und die Umwälzpumpe und das Heizelement so zu steuern, dass sie eingeschaltet sind.

13. Wärmeverwaltungssystem nach einem der Ansprüche 9 bis 12, wobei die Steuerung ferner dazu eingerichtet ist:
wenn die Temperatur des einem Wärmeaustausch zu unterziehenden Elements in ein drittes Temperaturintervall fällt und die Umgebungstemperatur kleiner als der erste Temperaturschwellenwert ist, den Kompressor und die Umwälzpumpe so zu steuern, dass sie eingeschaltet sind, und die Antriebskomponente so zu steuern, dass sie das erste Dichtelement antreibt, um den zweiten Einlass zu öffnen, und das zweite Dichtelement antreibt, um den zweiten Auslass zu öffnen; oder
wenn die Temperatur des einem Wärmeaustausch zu unterziehenden Elements in ein drittes Temperaturintervall fällt und die Umgebungstemperatur größer oder gleich dem ersten Temperaturschwellenwert ist, den Kompressor und die Umwälzpumpe so zu steuern, dass sie eingeschaltet sind, und die Antriebskomponente so zu steuern, dass sie das erste Dichtelement antreibt, um den zweiten Einlass zu schließen, und das zweite Dichtelement antreibt, um den zweiten Auslass zu schließen, wobei
das dritte Temperaturintervall ein Intervall ist, in dem ein Temperaturwert größer ist als ein größter Temperaturwert in dem ersten Temperaturintervall.

14. Wärmeverwaltungssystem nach einem der Ansprüche 9 bis 13, wobei das Wärmeverwaltungssystem ferner ein Vakuummeter umfasst und das Vakuummeter dazu eingerichtet ist, einen Vakuumgrad in dem zweiten Hohlraum zu erfassen; und
die Steuerung ferner elektrisch mit der Vakuumpumpe und dem Vakuummeter verbunden ist und dazu eingerichtet ist:
wenn die Antriebskomponente das erste Dichtelement antreibt, um den zweiten Einlass zu schließen, und das zweite Dichtelement antreibt, um den zweiten Auslass zu schließen, und der Vakuumgrad in dem zweiten Hohlraum größer oder gleich einem Vakuumgradschwellenwert ist, die Vakuumpumpe so zu steuern, dass sie ausgeschaltet ist.

15. Wärmeverwaltungssystem nach einem der Ansprüche 9 bis 14, ferner umfassend ein erstes Vakuumventil und ein zweites Vakuumventil, wobei das erste Vakuumventil zwischen den Luftansauganschluss der Vakuumpumpe und die Vakuumabsaugöffnung geschaltet ist, und das zweite Vakuumventil zwischen den Luftansauganschluss der Vakuumpumpe und einen Vakuumverstärker eines Fahrzeugs geschaltet ist.

16. Steuerungsverfahren für ein Wärmeverwaltungssystem, verwendet zum Steuern des Wärmeverwaltungssystems nach einem der Ansprüche 7 bis 15, wobei das Steuerungsverfahren umfasst:
Erhalten einer Temperatur eines einem Wärmeaustausch zu unterziehenden Elements und einer Umgebungstemperatur; und
wenn die Temperatur des einem Wärmeaustausch zu unterziehenden Elements in ein erstes Temperaturintervall fällt und die Umgebungstemperatur kleiner als ein erster Temperaturschwellenwert ist, Steuern eines Kompressors und einer Umwälzpumpe, sodass sie ausgeschaltet sind, und Steuern einer Antriebskomponente, dass sie ein erstes Dichtelement antreibt, um einen zweiten Einlass zu schließen, und ein zweites Dichtelement antreibt, um einen zweiten Auslass zu schließen; wenn die Temperatur des einem Wärmeaustausch zu unterziehenden Elements in ein erstes Temperaturintervall fällt und die Umgebungstemperatur größer oder gleich einem ersten Temperaturschwellenwert und kleiner oder gleich einem zweiten Temperaturschwellenwert ist, Steuern eines Kompressors und einer Umwälzpumpe, sodass sie ausgeschaltet sind, und Steuern einer Antriebskomponente, dass sie ein erstes Dichtelement antreibt, um einen zweiten Einlass zu öffnen, und ein zweites Dichtelement antreibt, um einen zweiten Auslass zu öffnen; oder
wenn die Temperatur des einem Wärmeaustausch zu unterziehenden Elements in ein erstes Temperaturintervall fällt und die Umgebungstemperatur größer als ein zweiter Temperaturschwellenwert ist, Steuern einer Antriebskomponente, dass sie ein erstes Dichtelement antreibt, um einen zweiten Einlass zu schließen, und ein zweites Dichtelement antreibt, um einen zweiten Auslass zu schließen.

17. Fahrzeug, umfassend ein einem Wärmeaustausch zu unterziehendes Element und das Wärmeverwaltungssystem nach einem der Ansprüche 7 bis 15, wobei das Wärmeverwaltungssystem dazu eingerichtet ist, einen Wärmeaustausch für das einem Wärmeaustausch zu unterziehende Element durchzuführen.

## Revendications

1. Appareil d'échange de chaleur, comprenant un boîtier et une plaque d'espacement disposée dans le boîtier, dans lequel la plaque d'espacement sépare le boîtier en une première cavité et une seconde cavité, la première cavité est une cavité d'accueil de fluide de refroidissement et la seconde cavité est une cavité d'air ;
une paroi externe, sur un côté qui est de la première cavité et qui est à l'opposé à la seconde cavité, est configurée pour être en contact thermiquement conducteur avec un élément à soumettre à un échange de chaleur, et la première cavité est munie d'une première entrée et d'une première sortie ; **caractérisé en ce que** la seconde cavité est munie d'une seconde entrée et d'une seconde sortie, un premier élément d'étanchéité configuré pour ouvrir ou fermer la seconde entrée est disposé au niveau de la seconde entrée, et un second élément d'étanchéité configuré pour ouvrir ou fermer la seconde sortie est disposé au niveau de la seconde sortie, dans lequel la seconde entrée et la seconde sortie sont disposées face à face ;
**en ce que** la plaque d'espacement est munie d'une pluralité d'ailettes se prolongeant vers la seconde cavité, et qu'une extrémité qui est des ailettes et qui est à l'opposé de la plaque d'espacement est disposée à un intervalle d'une paroi interne sur un côté qui est de la seconde cavité et qui est à l'opposé de la première cavité, et **en ce que** les ailettes se prolongent dans une direction allant de la seconde entrée à la seconde sortie.

2. Appareil d'échange de chaleur selon la revendication 1, dans lequel un élément de préservation de la chaleur est disposé au niveau des extrémités qui sont d'au moins certaines des ailettes et qui sont à l'opposé de la plaque d'espacement, et l'élément de préservation de la chaleur est supporté entre la plaque nervurée et une paroi interne de la seconde cavité.

3. Appareil d'échange de chaleur selon la revendication 1 ou 2, dans lequel une première bague d'étanchéité est disposée au niveau d'une partie d'extrémité de la seconde entrée, et lorsque le premier élément d'étanchéité ferme la seconde entrée, la première bague d'étanchéité est comprimée entre le premier élément d'étanchéité et la partie d'extrémité de la seconde entrée ; et/ou
une seconde bague d'étanchéité est disposée au niveau de la partie d'extrémité de la seconde sortie, et lorsque le second élément d'étanchéité ferme la seconde sortie, la seconde bague d'étanchéité est comprimée entre le second élément d'étanchéité et la partie d'extrémité de la seconde sortie.

4. Appareil d'échange de chaleur selon l'une quelconque des revendications 1 à 3, dans lequel le boîtier est muni d'un orifice d'échappement sous vide qui communique avec la seconde cavité.

5. Appareil d'échange de chaleur selon l'une quelconque des revendications 1 à 3, dans lequel une première couche d'isolation thermique est disposée sur la paroi interne sur le côté qui est de la seconde cavité et qui est à l'opposé de la première cavité ; et/ou une seconde couche d'isolation thermique est disposée sur une paroi externe sur le côté qui est de la seconde cavité et qui est à l'opposé de la première cavité.

6. Dispositif d'échange de chaleur, comprenant un composant d'entraînement et l'appareil d'échange de chaleur selon l'une quelconque des revendications 1 à 5, dans lequel le composant d'entraînement est connecté séparément à un premier élément d'étanchéité et à un second élément d'étanchéité par transmission, et le composant d'entraînement est configuré pour : entraîner le premier élément d'étanchéité pour ouvrir ou fermer une seconde entrée, et entraîner le second élément d'étanchéité pour ouvrir ou fermer une seconde sortie.

7. Système de gestion thermique, comprenant un compresseur, un condenseur, un refroidisseur, une vanne d'expansion, une pompe de circulation et le dispositif d'échange de chaleur selon la revendication 6, dans lequel le refroidisseur comprend un premier et un second circuit qui sont isolés l'un de l'autre ; une sortie du compresseur est connectée à une entrée du condenseur, une sortie du condenseur est connectée à une entrée du premier circuit à travers la vanne d'expansion, et une sortie du premier circuit est connectée à une entrée du compresseur ; et
une sortie de la pompe de circulation est connectée à une première entrée d'une première cavité, une première sortie de la première cavité est connectée à une entrée du second circuit, et une sortie du second circuit est connectée à une entrée de la pompe de circulation.

8. Système de gestion thermique selon la revendication 7, dans lequel une seconde cavité est munie d'un orifice d'échappement sous vide ; et
le système de gestion thermique comprend également une pompe à vide, l'orifice d'entrée d'air de la pompe de circulation est connecté à l'orifice d'échappement sous vide, et la pompe à vide est configurée pour extraire l'air de la seconde cavité lorsqu'un premier élément d'étanchéité ferme une seconde entrée et qu'un second élément d'étanchéité ferme une seconde sortie.

9. Système de gestion thermique selon la revendication 8, comprenant également un appareil de détection de température et un dispositif de commande, dans lequel l'appareil de détection de température est configuré pour détecter une température ambiante et une température d'un élément à soumettre à un échange de chaleur, et le dispositif de commande est connecté électriquement séparément au compresseur, à la pompe de circulation, à un composant d'entraînement et au dispositif de détection de température, et est configuré pour :
lorsque la température de l'élément à soumettre à un échange de chaleur tombe dans un premier intervalle de température, commander l'arrêt du compresseur et de la pompe de circulation, et commander le composant d'entraînement pour actionner le premier élément d'étanchéité pour fermer la seconde entrée et pour actionner le second élément d'étanchéité pour fermer la seconde sortie.

10. Système de gestion thermique selon la revendication 8, comprenant également un appareil de détection de température et un dispositif de commande, dans lequel l'appareil de détection de température est configuré pour détecter une température ambiante et une température d'un élément à soumettre à un échange de chaleur, et le dispositif de commande est connecté électriquement séparément au compresseur, à la pompe de circulation, à un composant d'entraînement et au dispositif de détection de température, et est configuré pour :
lorsque la température de l'élément à soumettre à un échange de chaleur tombe dans un premier intervalle de température, et que la température ambiante est inférieure à un premier seuil de température, commander l'arrêt du compresseur et de la pompe de circulation, et commander le composant d'entraînement pour actionner le premier élément d'étanchéité pour fermer la seconde entrée et pour actionner le second élément d'étanchéité pour fermer la seconde sortie ;
lorsque la température de l'élément à soumettre à un échange de chaleur tombe dans un premier intervalle de température, et que la température ambiante est supérieure ou égale à un premier seuil de température et inférieure ou égale à un second seuil de température, commander l'arrêt du compresseur et de la pompe de circulation, et commander le composant d'entraînement pour actionner le premier élément d'étanchéité pour ouvrir la seconde entrée et pour actionner le second élément d'étanchéité pour ouvrir la seconde sortie ; ou
lorsque la température de l'élément à soumettre à un échange de chaleur tombe dans un premier intervalle de température, et que la température ambiante est supérieure à un second seuil de température, commander l'activation du compresseur et de la pompe de circulation, et commander le composant d'entraînement pour actionner le premier élément d'étanchéité pour fermer la seconde entrée et pour actionner le second élément d'étanchéité pour fermer la seconde sortie.

11. Système de gestion thermique selon la revendication 9 ou 10, dans lequel le dispositif de commande est également configuré pour :
lorsque la température de l'élément à soumettre à un échange de chaleur tombe dans un deuxième intervalle de température, et qu'une différence entre la température ambiante et la température de l'élément à soumettre à un échange de chaleur est supérieure ou égale à un seuil de différence de température, commander l'arrêt du compresseur et de la pompe de circulation, et commander le composant d'entraînement pour actionner le premier élément d'étanchéité pour ouvrir la seconde entrée, et pour actionner le second élément d'étanchéité pour ouvrir la seconde sortie ; ou
lorsque la température de l'élément à soumettre à un échange de chaleur tombe dans un deuxième intervalle de température, et qu'une différence entre la température ambiante et la température de l'élément à soumettre à un échange de chaleur est inférieure à un seuil de différence de température, commander le composant d'entraînement pour actionner le premier élément d'étanchéité pour fermer la seconde entrée, et pour actionner le second élément d'étanchéité pour fermer la seconde sortie, dans lequel
le deuxième intervalle de température est un intervalle dans lequel une valeur de température est inférieure à une valeur de température la plus petite dans le premier intervalle de température.

12. Système de gestion thermique selon la revendication 11, comprenant également un élément chauffant, dans lequel l'élément chauffant est connecté entre la première cavité et le second circuit ; et
le dispositif de commande est également connecté électriquement à l'élément chauffant, et lorsque la température de l'élément à soumettre à un échange de chaleur tombe dans le deuxième intervalle de température, et que la différence entre la température ambiante et la température de l'élément à soumettre à un échange de chaleur est inférieure au seuil de différence de température, le dispositif de commande est également configuré pour :
commander l'arrêt du compresseur et commander l'activation de la pompe de circulation et de l'élément chauffant.

13. Système de gestion thermique selon l'une quelconque des revendications 9 à 12, dans lequel le dispositif de commande est également configuré pour :
lorsque la température de l'élément à soumettre à un échange de chaleur tombe dans un troisième intervalle de température, et que la température ambiante est inférieure au premier seuil de température, commander l'activation du compresseur et de la pompe de circulation, et commander le composant d'entraînement pour actionner le premier élément d'étanchéité pour ouvrir la seconde entrée et pour actionner le second élément d'étanchéité pour ouvrir la seconde sortie ; ou
lorsque la température de l'élément à soumettre à un échange de chaleur tombe dans un troisième intervalle de température, et que la température ambiante est supérieure ou égale au premier seuil de température, commander l'activation du compresseur et de la pompe de circulation, et commander le composant d'entraînement pour actionner le premier élément d'étanchéité pour fermer la seconde entrée et pour actionner le second élément d'étanchéité pour fermer la seconde sortie, dans lequel
le troisième intervalle de température est un intervalle dans lequel une valeur de température est supérieure à une valeur de température la plus élevée dans le premier intervalle de température.

14. Système de gestion thermique selon l'une quelconque des revendications 9 à 13, dans lequel le système de gestion thermique comprend également un manomètre sous vide, et le manomètre sous vide est configuré pour détecter un degré de vide dans la seconde cavité ; et
le dispositif de commande est également connecté électriquement à la pompe à vide et au manomètre sous vide, et est configuré pour :
lorsque le composant d'entraînement actionne le premier élément d'étanchéité pour fermer la seconde entrée, et actionne le second élément d'étanchéité pour fermer la seconde sortie, et que le degré de vide dans la seconde cavité est supérieur ou égal à un seuil de degré de vide, commander l'arrêt de la pompe à vide.

15. Système de gestion thermique selon l'une quelconque des revendications 9 à 14, comprenant également une première vanne à vide et une seconde vanne à vide, dans lequel la première vanne à vide est connectée entre l'orifice d'entrée d'air de la pompe à vide et l'orifice d'échappement sous vide, et la seconde vanne à vide est connectée entre l'orifice d'entrée d'air de la pompe à vide et un amplificateur de vide d'un véhicule.

16. Procédé de commande d'un système de gestion thermique, utilisé pour commander le système de gestion thermique selon l'une quelconque des revendications 7 à 15, dans lequel le procédé de commande comprend :
l'obtention d'une température d'un élément à soumettre à un échange de chaleur et d'une température ambiante ; et
lorsque la température de l'élément à soumettre à un échange de chaleur tombe dans un premier intervalle de température, et que la température ambiante est inférieure à un premier seuil de température, la commande de l'arrêt d'un compresseur et d'une pompe de circulation, et la commande d'un composant d'entraînement pour actionner un premier élément d'étanchéité pour fermer une seconde entrée et pour actionner un second élément d'étanchéité pour fermer une seconde sortie ;
lorsque la température de l'élément à soumettre à un échange de chaleur tombe dans un premier intervalle de température, et que la température ambiante est supérieure ou égale à un premier seuil de température et inférieure ou égale à un second seuil de température, la commande de l'arrêt d'un compresseur et d'une pompe de circulation, et la commande d'un composant d'entraînement pour actionner un premier élément d'étanchéité pour ouvrir une seconde entrée et pour actionner un second élément d'étanchéité pour ouvrir une seconde sortie ; ou
lorsque la température de l'élément à soumettre à un échange de chaleur tombe dans un premier intervalle de température, et que la température ambiante est supérieure à un second seuil de température, la commande d'un composant d'entraînement pour actionner un premier élément d'étanchéité pour fermer une seconde entrée et pour actionner un second élément d'étanchéité pour fermer une seconde sortie.

17. Véhicule, comprenant un élément à soumettre à un échange de chaleur et le système de gestion thermique selon l'une quelconque des revendications 7 à 15, dans lequel le système de gestion thermique est configuré pour réaliser un échange de chaleur pour l'élément à soumettre à un échange de chaleur.
